(19) Europäisches Patentamt
European Patent Office
Office européen des brevets

(11) **EP 4 258 540 B1**

(12) **EUROPEAN PATENT SPECIFICATION**

(45) Date of publication and mention
of the grant of the patent:
**04.03.2026 Bulletin 2026/10**

(21) Application number: **21900575.8**

(22) Date of filing: **30.11.2021**

(51) International Patent Classification (IPC):
*H02P 29/024* (2016.01)   *B60L 15/20* (2006.01)
*B60L 3/10* (2006.01)   *B60L 3/12* (2006.01)
*B60L 15/38* (2006.01)   *B60L 15/02* (2006.01)
*H02P 21/18* (2016.01)

(52) Cooperative Patent Classification (CPC):
**B60L 15/025; B60L 3/102; B60L 3/104;
B60L 3/106; B60L 3/12; B60L 15/38; H02P 21/18;**
B60L 2200/26; B60L 2220/12; B60L 2220/14;
B60L 2240/12; B60L 2240/26; B60L 2240/32;
B60L 2240/421; B60L 2240/423;   (Cont.)

(86) International application number:
**PCT/JP2021/043765**

(87) International publication number:
**WO 2022/118822 (09.06.2022 Gazette 2022/23)**

(54) **DRIVE DEVICE AND DRIVE METHOD FOR ROTARY ELECTRIC MACHINE, AND RAILWAY VEHICLE**

ANTRIEBSVORRICHTUNG UND ANTRIEBSVERFAHREN FÜR ELEKTRISCHE DREHMASCHINE UND SCHIENENFAHRZEUG

DISPOSITIF D'ENTRAÎNEMENT ET PROCÉDÉ D'ENTRAÎNEMENT POUR MACHINE ÉLECTRIQUE ROTATIVE, ET VÉHICULE FERROVIAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2020 JP 2020201959**

(43) Date of publication of application:
**11.10.2023 Bulletin 2023/41**

(73) Proprietor: **Hitachi, Ltd.
Chiyoda-ku
Tokyo 100-8280 (JP)**

(72) Inventors:
• **KUNIHIRO, Naoki
Tokyo 100-8280 (JP)**
• **HATSUSE, Wataru
Tokyo 100-8280 (JP)**
• **KANAZAWA, Tomomi
Tokyo 100-8280 (JP)**

(74) Representative: **Mewburn Ellis LLP
Aurora Building
Counterslip
Bristol BS1 6BX (GB)**

(56) References cited:
EP-A1- 3 680 123   JP-A- 2011 193 568
JP-A- 2012 120 320   US-A1- 2014 018 991
US-A1- 2016 039 311   US-B1- 6 274 998
US-B1- 9 463 697

(52) Cooperative Patent Classification (CPC): (Cont.)
B60L 2240/427; B60L 2240/429; B60L 2240/465;
B60L 2240/526; B60L 2240/529; B60L 2240/667;
B60L 2260/42; B60L 2270/145; Y02T 10/72

## Description

Technical Field

The present invention relates to a drive device and a drive method for a rotary electric machine, and a railway vehicle on which the rotary electric machine is mounted.

Background Art

A railway vehicle rotates a wheel which is a drive wheel by a torque of a rotary electric machine, and accelerates a vehicle by a tangential force generated in the wheel as a reaction force received by a wheel tread surface from a rail.

In a case where this tangential force fluctuates depending on a tangential force coefficient $\mu$ representing an adhesion state between the wheel and the rail and the torque of the wheel becomes excessively larger than the tangential force, only the force that rotates the wheel increases while the force that accelerates the vehicle remains small, and as a result, slip or slide of the wheel (hereinafter, abbreviated as "slip/slide") occurs. In particular, in rainy weather or snowfall weather, since an adhesion coefficient greatly decreases, the slip/slide is likely to occur.

In a case where the slip/slide is expanded, there are a problem that acceleration and deceleration performance of the vehicle deteriorates and a problem that vehicle body vibration occurs due to a large fluctuation in the tangential force to deteriorate ride comfort. Thus, slip and re-adhesion control in which the slip/slide occurring between the wheel and the rail is quickly detected and the torque of the rotary electric machine is reduced to re-adhere the wheel to the rail is widely used.

At the time of the slip/slide, since an angular velocity of a rotor of the rotary electric machine rapidly changes, there is also a problem that sensorless control tends to be unstable, and a technique for detecting the slip/slide in an early stage while a control system is stabilized is required. Various improved techniques have been proposed for this problem.

For example, PTL 1 discloses a technique of calculating an acceleration estimation value $\alpha i$ from a time change (differential value) of a frequency command value of a control device and determining that the slip/-slide occurs in a case where it is determined that the acceleration estimation value exceeds a predetermined threshold in order to enable detection of slip or slide of a drive shaft of an induction electric motor even without using a speed sensor or even in a case where a relative speed of each induction electric motor is small.

PTL 2 discloses a technique for calculating an acceleration estimation value by adding a term proportional to a position error estimation value of a permanent magnet synchronous electric motor and a differential value of a term proportional to the position error estimation value in order to reduce a delay in acceleration estimation due to $\gamma$- and $\delta$-axis currents and vibration of a mechanical system and a delay in slip/slide control.

PTL 3 discloses a technique for setting a sensorless control gain to be variable depending on a rotation phase angle error in order to achieve two points of preventing control from becoming unstable due to an excessively large control gain in a steady state with respect to a rapid change in speed such as slip and improving a step-out tolerance in a transient state.

Citation List

Patent Literature

PTL 1: JP 2004-80936 A
PTL 2: JP 5515885 B
PTL 3: JP 5908205 B
US 9463697 B1 proposes a dual data rate traction control system. EP 3680123 A1 proposes a method for controlling a railway vehicle. US 2014/0018991 A1 proposes a method for controlling an electric motor.

Summary of Invention

Technical Problem

The inventors of the present application have extensively conducted studies for the purpose of further speeding up means for detecting slip/slide, and have consequently obtained the following knowledge.

The technique described in PTL 1 calculates the acceleration estimation value $\alpha i$ from the time change (differential value) of the frequency command value of the control device that drives a plurality of induction electric motors in parallel without a speed sensor. However, as described in paragraph [0027] of PTL 1, in order to remove noise, the acceleration estimation value $\alpha i$ is calculated by performing a first-order differentiation after low pass filter (LPF) calculation having a pass band of 3 Hz or less is performed for the calculated output frequency. There is a problem that the detection of the slip/slide is delayed by this low-pass filter calculation.

The technique described in PTL 2 proposes a method for calculating the acceleration estimation value by differentiating the position error estimation value of the permanent magnet synchronous electric motor and reducing the detection delay of the slip/slide. This method has a configuration in which an acceleration from differential processing is calculated similarly to a method for calculating an acceleration estimation value from a differential value of a frequency that is generally often used, and requires processing (low-pass filter or the like) for smoothing vibration of the differential value. Thus, as described in paragraphs [0028] to [0031] of PTL 2, since low-pass filters having time constants Ta and Tb are constructed as vibration reduction countermeasure units 54 and 55, there is a problem that the delay in the detection of the slip/slide cannot be sufficiently improved due to the influence of the low-pass filters.

The technique described in PTL 3 proposes a method for changing the sensorless control gain more as an absolute value of an estimated phase shift becomes larger in order to stabilize the sensorless control at the time of the rapid change in the speed. However, even though an operation can be performed with the stable gain in the steady state, eventually, there is a possibility that the sensorless control gain becomes unstable when the sensorless control gain is increased in a state where the phase shift is expanded. Originally, it is desirable to provide a control system in which position sensorless control can stably follow even when the speed changes at a high acceleration such as during the slip.

According to the above description, when it is considered that the slip/slide is detected in an early stage while the control system is stabilized, in a case where differential processing is used for a frequency estimation value and a position error estimation value as in PTL 1 and PTL 2, since the differential value becomes vibrational, it is necessary to provide processing of the low-pass filter that sufficiently attenuates a vibration component included in the differential value together, and it is difficult to improve the delay in the detection of the slip/-slide. Furthermore, in the method of transiently increasing the sensorless control gain as in PTL 3, there is a possibility that the control becomes unstable.

Therefore, the present invention has been made in view of the above points, and an object of the present invention is to provide a technique for speeding up slip/slide detection while a control system is stabilized by providing a term for compensating a deviation amount due to an acceleration component in a speed estimation value of sensorless control such that sensorless control is not destabilized at the time of slip/slide and further detecting the slip/slide without using differentiation processing based on a magnitude of a compensation amount.

Solution to Problem

In order to solve such a problem, in a first aspect, the present invention provides a drive device for a rotary electric machine according to claim 1 or claim 2.

In a second aspect, the present invention provides a railway vehicle according to claim 12.

In a third aspect, the present invention provides a drive method of a rotary electric machine of a vehicle according to claim 13 or claim 14.

Advantageous Effects of Invention

According to the present invention, for example, it is possible to speed up the detection of the slip/slide while the control system is stabilized at the time of the slip/slide of the drive wheel driven by the rotary electric machine mounted on the railway vehicle.

Other objects, configurations, and effects will be made apparent in the following description of the following embodiments.

Brief Description of Drawings

[FIG. 1] FIG. 1 is a diagram illustrating an example of functional blocks of a drive device for a rotary electric machine according to a first embodiment.
[FIG. 2] FIG. 2 is a diagram illustrating a schematic configuration of a carriage for a railway vehicle.
[FIG. 3] FIG. 3 is a diagram illustrating an example of functional blocks of a motion equation of a vehicle for a railway vehicle and a drive wheel axle.
[FIG. 4] FIG. 4 is a diagram illustrating a relationship between a slip speed and a tangential force coefficient between a wheel and a rail.
[FIG. 5] FIG. 5 is a diagram illustrating slip/slide while the railway vehicle is being powered and regenerated.
[FIG. 6] FIG. 6 is a diagram illustrating a phase deviation generated while the railway vehicle is being accelerated and decelerated.
[FIG. 7] FIG. 7 is a diagram illustrating a current vector in a case where a phase deviation occurs between a rotor phase and a control phase estimation value.
[FIG. 8] FIG. 8 is a diagram illustrating an example of functional blocks of a phase synchronization control unit according to the first embodiment.
[FIG. 9] FIG. 9 is a diagram illustrating an example of functional blocks of a constant speed phase deviation converging unit.
[FIG. 10] FIG. 10 is a diagram illustrating an example of functional blocks of an acceleration and deceleration phase deviation converging unit.
[FIG. 11] FIG. 11 is a diagram illustrating an example of an effect to which compensation by the acceleration and deceleration phase deviation converging unit is added.
[FIG. 12] FIG. 12 is a diagram illustrating a method for detecting slip by an output of the acceleration and deceleration phase deviation converging unit when slip occurs.
[FIG. 13] FIG. 13 is a diagram illustrating an example of functional blocks of a slip/slide detection determination unit.
[FIG. 14] FIG. 14 is a diagram illustrating a comparison between a configuration of the related art and a configuration of the present invention for detecting slip/slide.
[FIG. 15] FIG. 15 is a diagram illustrating an example of functional blocks of a phase synchronization control unit according to a modification of the first embodiment.

[FIG. 16] FIG. 16 is a diagram illustrating an example of functional blocks of a constant speed phase deviation converging unit according to the modification of the first embodiment.

[FIG. 17] FIG. 17 is a diagram illustrating an example of functional blocks of an acceleration and deceleration phase deviation converging unit according to the modification of the first embodiment.

[FIG. 18] FIG. 18 is a diagram illustrating an example of functional blocks of a frequency estimation control unit in a case where the first embodiment is applied to a drive device of an induction machine.

[FIG. 19] FIG. 19 is a diagram illustrating an example of functional blocks of a constant speed q-axis current deviation converging unit in the frequency estimation control unit.

[FIG. 20] FIG. 20 is a diagram illustrating an example of functional blocks of an acceleration and deceleration q-axis current deviation converging unit in the frequency estimation control unit.

[FIG. 21] FIG. 21 is a diagram illustrating an example of functional blocks of a drive device for a rotary electric machine according to a second embodiment.

[FIG. 22] FIG. 22 is a diagram illustrating an example of functional blocks of a slip/slide detection determination unit according to the second embodiment.

[FIG. 23] FIG. 23 is a diagram illustrating an example of functional blocks of a drive device for a rotary electric machine according to a third embodiment.

[FIG. 24] FIG. 24 is a diagram illustrating an example of functional blocks of a slip/slide detection determination unit according to the third embodiment.

[FIG. 25] FIG. 25 is a diagram illustrating an example of functional blocks of an acceleration and deceleration phase deviation converging unit according to the third embodiment.

[FIG. 26] FIG. 26 is a diagram illustrating a comparison of effects depending on the presence or absence of an upper and lower limiter provided in the acceleration and deceleration phase deviation converging unit.

Description of Embodiments

Hereinafter, as a mode for carrying out the present invention, first to third embodiments will be described in detail with reference to the drawings.

In each embodiment, components having identical reference signs are indicated as identical constituent elements or constituent elements having similar functions. In addition, in the embodiments to be described later, description of identical or similar constituent elements as the constituent elements in the embodiments described above may be omitted.

[First embodiment]

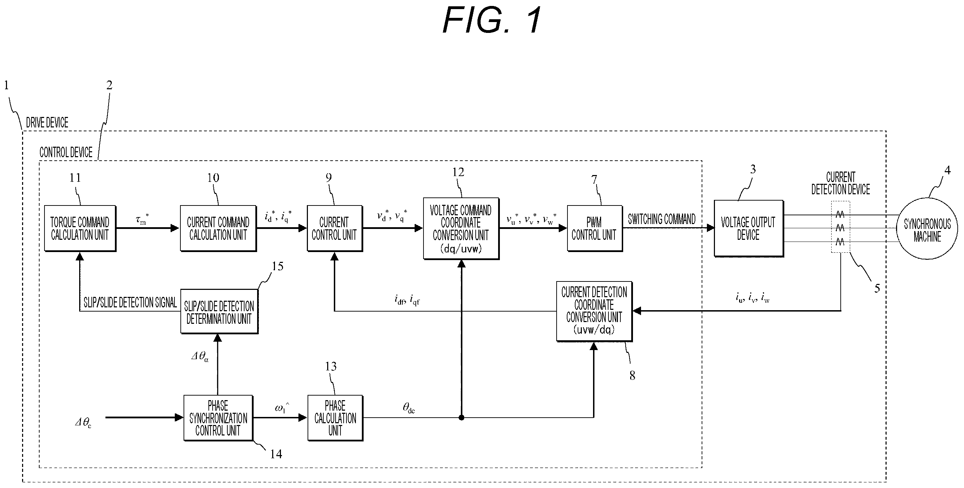

FIG. 1 is a diagram illustrating an example of functional blocks of a drive device for a rotary electric machine according to a first embodiment of the present invention.

In FIG. 1, only the minimum necessary functional blocks are illustrated in the first embodiment, and a power conversion unit including a driving transistor such as an insulated-gate bipolar transistor (IGBT) and a power device such as a diode and a control configuration for the power conversion unit are illustrated in a block diagram as a voltage output device 3, and detailed illustration is omitted.

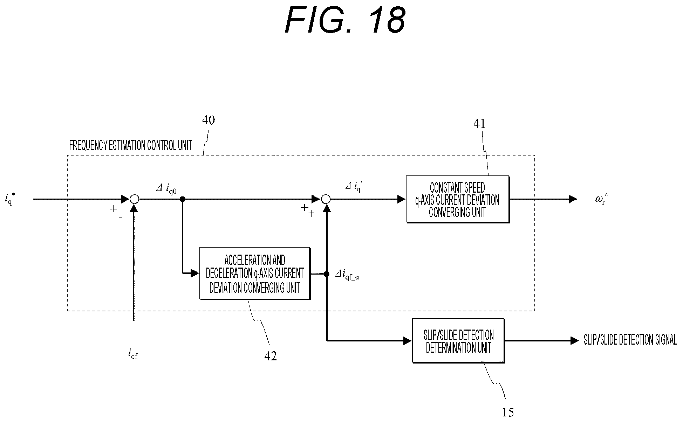

In addition, although the rotary electric machine is used as the synchronous machine 4 in FIG. 1, an induction machine other than the synchronous machine may be used as illustrated in FIGS. 18 to 20 to be described later.

As illustrated in FIG. 1, in a drive device 1, the voltage output device 3 applies a three-phase AC voltage to the synchronous machine 4 via a drive circuit and a main circuit (not illustrated, but included in the voltage output device 3) based on a switching command from a control device 2.

A drive current flows in the synchronous machine 4 by the application of the three-phase AC voltage from the voltage output device 3, and a rotational torque is generated.

A current detector 5 includes a Hall current transformer (CT) or the like, and detects waveforms of three-phase currents $i_u$, $i_v$, and $i_w$ of a U phase, a V phase, and a W phase flowing through the synchronous machine 4. However, it is not always necessary to detect all the currents of the three phases by the current detector 5, and any two phases of the three phases may be detected, and the remaining one phase may be obtained by calculation on the assumption that the three-phase currents are in an equilibrium state.

A control program for driving and controlling the synchronous machine 4 connected as a load is implemented in the control device 2. Hereinafter, a functional aspect of each component included in the control device 2 will be described.

A torque command calculation unit 11 outputs a torque command value $\tau_m{}^*$ in accordance with an operation command from a host device.

A current command calculation unit 10 outputs dq-axis current command values $i_d{}^*$ and $i_q{}^*$ for obtaining a predetermined torque to the torque command value $\tau_m{}^*$.

A current detection coordinate conversion unit 8 converts the three-phase currents $i_u$, $i_v$, and $i_w$ of the synchronous machine 4 detected by the current detector 5 into dq coordinates of a rotating coordinate system by using a d-axis estimation phase $\theta_{dc}$ recognized by the control device 2, and outputs, as dq-axis current detection values ($i_{df}$ and $i_{qf}$), the dq coordinates to the current control unit 9.

The current control unit 9 generates and outputs dq voltage command values $v_d^*$ and $v_q^*$ by proportional integral (PI) control or the like such that a current deviation between the dq-axis current detection value output from the current detection coordinate conversion unit 8 and a dq-axis current command value output from the current command calculation unit 10 becomes zero.

The voltage command coordinate conversion unit 12 outputs three-phase AC voltage command values $v_u^*$, $v_v^*$, and $v_w^*$ by using the dq-axis voltage command value output from the current control unit 9 and the d-axis estimation phase $\theta_{dc}$.

A PWM control unit 7 outputs a switching command of a pulse width modulation (PWM voltage) to the voltage output device 3 based on the three-phase AC voltage command values vu*, vv*, and vw* output from the voltage command coordinate conversion unit 12.

A phase synchronization control unit 14 outputs an angular velocity estimation value $\omega_1^\wedge$ to set phase deviation information $\Delta\theta_c$ to be zero based on phase deviation information $\Delta\theta_c$. At the same time, although details will be described later, an acceleration and deceleration phase deviation compensation amount $\Delta\theta_\alpha$ is output.

Note that, the phase deviation information $\Delta\theta_c$ indicates a difference between a phase estimation value $\theta_{dc}$ and a rotor phase $\theta_d$ of the synchronous machine 4. Here, the phase deviation information $\Delta\theta_c$ may be either an estimation value $\Delta\theta_{est}$ of a phase deviation by sensorless control or phase deviation information $\Delta\theta_c$ obtained by calculating a difference from the phase estimation value $\theta_{dc}$ by using information on the phase detection value $\theta_r$ by a resolver or the like although not illustrated.

In addition, for example, a method for estimating the phase deviation estimation value based on a radio-frequency current detection value when a radio-frequency voltage is superimposed in a low speed range or a method for estimating the phase deviation estimation value by using an induced voltage of a rotary electric machine in a high speed range is used as a method for obtaining the phase deviation estimation value $\Delta\theta_{est}$.

A slip/slide detection determination unit 15 performs detection determination of slip and slide based on the acceleration and deceleration phase deviation compensation amount $\Delta\theta_\alpha$ output from the phase synchronization control unit 14, and outputs a slip/slide detection signal to the torque command calculation unit 11. When the slip/slide detection signal is received, the torque command calculation unit 11 quickly reduces the torque command value $\tau_m^*$ to converge the slip/slide generated between a wheel which is a drive wheel and a rail, and causes the wheel re-adhere to the rail.

A phase calculation unit 13 performs integration processing on the angular velocity estimation value $\omega_1^\wedge$ output from the phase synchronization control unit 14 and outputs the phase estimation value $\theta_{dc}$.

Hereinafter, slip/slide and re-adhesion control in a railway vehicle will be described.

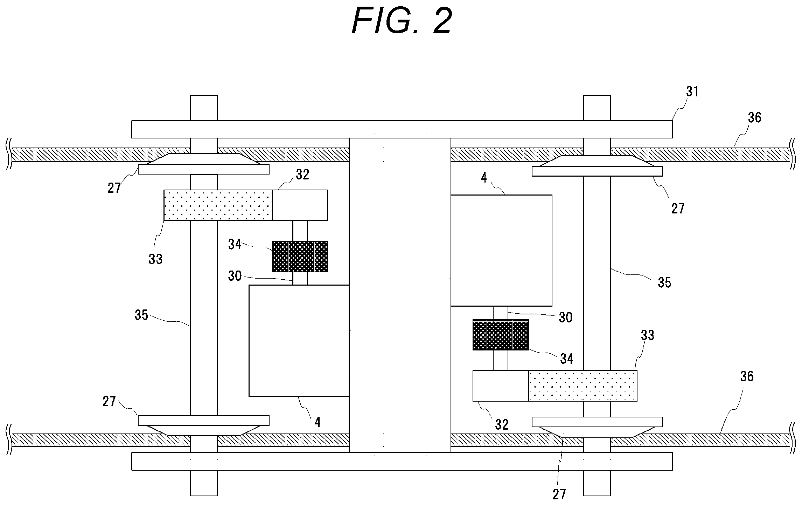

FIG. 2 is a diagram illustrating a schematic configuration of a carriage for the railway vehicle.

The synchronous machine 4 is provided in the carriage 31, and a rotor shaft 30 of the synchronous machine 4 transmits power to a small gear 32 via a joint 34. An axle 35 is rotated by a reduction gear including the small gear 32 and a large gear 33, and a wheel 27 connected to the axle 35 is rotated. The wheel 27 transmits force to the carriage 31 to accelerate a vehicle by a tangential force generated on the wheel 27 as a reaction force received by a wheel tread surface from the rail 36.

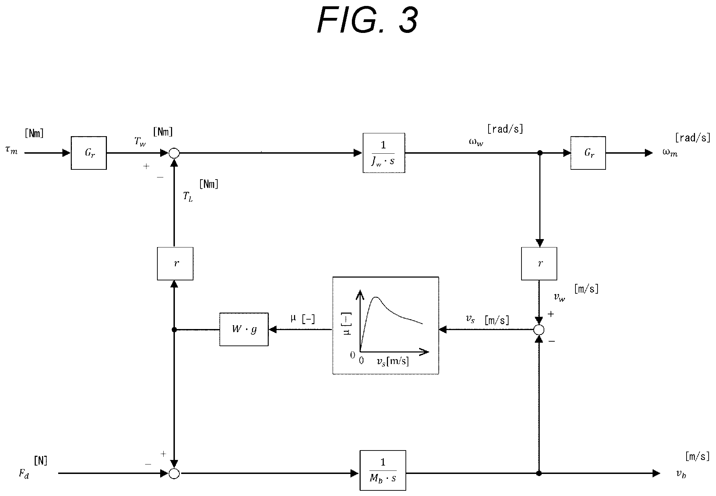

FIG. 3 is a diagram illustrating functional blocks of a motion equation of a vehicle and one drive wheel axle.

A motion equation of a vehicle body and a motor is illustrated in a block diagram in consideration of adhesion due to a tangential force coefficient $\mu$ between the wheel which is the drive wheel and the rail by motor torque. Force that rotates the wheel is determined by a difference between a wheel torque and a tangential force torque, force that accelerates the vehicle is determined by a difference between tangential force and travel resistance, and these forces change depending on the tangential force coefficient $\mu$.

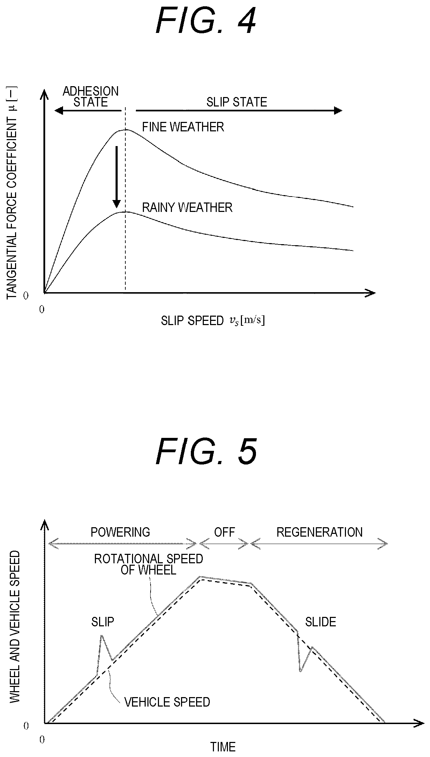

FIG. 4 is a diagram illustrating a relationship between a slip speed between the wheel and the rail and the tangential force coefficient $\mu$.

The tangential force coefficient $\mu$ changes depending on the slip speed that is a difference between a wheel peripheral speed and a vehicle body speed. In addition, in rainy weather, the tangential force coefficient $\mu$ is lower than that in fine weather, and the slip/slide is likely to occur. In addition, it is known that the tangential force coefficient $\mu$ changes not only due to rain but also due to oil, fallen leaves, and dust on a rail surface, and also due to a vehicle speed.

FIG. 5 is a diagram illustrating the slip/slide during powering and regeneration of the railway vehicle.

As illustrated in FIG. 4, in a case where the tangential force coefficient $\mu$ decreases due to the influence of rain or the like, only the force that rotates the wheel increases while the force that accelerates the vehicle in FIG. 3 is small, and the slip speed increases. Slip occurs in a case where the slip speed exceeds an inflection point of the tangential force coefficient $\mu$ illustrated in FIG. 4. Since the tangential force coefficient $\mu$ has a negative inclination with respect to the slip speed, the slip continues to increase in an expanding direction once the slip occurs. Although it has been described that the slip occurs during powering, the slide similarly occurs during regeneration as illustrated in FIG. 5.

In a case where the slip/slide is expanded, a problem that acceleration and deceleration performance of the vehicle is deteriorated, and a problem that the force that accelerates the vehicle illustrated in FIG. 3 greatly fluctuates due to a large fluctuation in the tangential force and vehicle body vibration occurs to deteriorate ride comfort also arise. Thus, it is necessary to re-adhere the wheel to the rail by quickly detecting the slip/slide occurring between the wheel and the rail and reducing the torque of the rotary electric machine.

Hereinafter, the phase deviation generated while the railway vehicle is being accelerated and decelerated will be described.

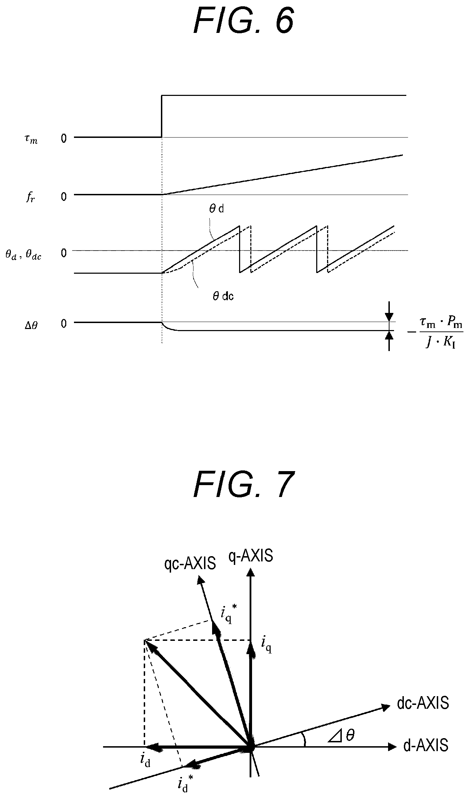

FIG. 6 is a diagram illustrating the phase deviation generated while the vehicle is being accelerated and decelerated.

First, the phase deviation $\Delta\theta$ generated during the acceleration and deceleration will be described. The phase deviation $\Delta\theta$ is defined as a deviation between the rotor phase $\theta_d$ of the synchronous machine 4 and the control phase estimation value $\theta_{dc}$ by the following equation (Math. 1). Here, s is a Laplace operator, and $\omega_r$ is a rotor angular velocity of the synchronous machine 4.

[Math. 1]

$$\Delta\theta = \theta_{dc} - \theta_d$$
$$= \left(\hat{\omega_1} - \omega_r\right) \cdot \frac{1}{s}$$

Next, a case where the phase synchronization control unit 14 is constructed by general PI control will be described as an example. Assuming that a proportional gain and an integral gain in the phase synchronization control unit 14 are $K_P$ and $K_I$, respectively, the angular velocity estimation value $\omega_1\hat{}$ can be calculated by the following equation (Math. 2) based on the phase deviation information $\Delta\theta_c$.

[Math. 2]

$$\hat{\omega_1} = \left(K_P + \frac{K_I}{s}\right) \cdot (-\Delta\theta_c)$$

The rotor angular velocity $\omega_r$ of the synchronous machine 4 can be calculated from a motor torque $\tau_m$ and an inertia moment J by the following equation (Math. 3). Here, $P_m$ is the number of pole pairs of the synchronous machine 4. In addition, the inertia moment J is treated as an equivalent inertia moment obtained by combining up to adhesion due to a vehicle mass and the tangential force coefficient $\mu$ as viewed from the motor axis illustrated in FIG. 3 for simplification of description. In a state where the wheel and the rail adhere to each other, the inertia moment J is large, and in a case where the slip/slide occurs between the wheel and the rail, the inertia moment J appears to be small as viewed from the motor axis.

[Math. 3]

$$\omega_r = \frac{\tau_m \cdot P_m}{J \cdot s}$$

From (Math. 1) to (Math. 3), the phase deviation $\Delta\theta$ can be expressed by the following equation (Math. 4).

[Math. 4]

$$\Delta\theta = \left\{\left(K_P + \frac{K_I}{s}\right) \cdot (-\Delta\theta_c) - \frac{\tau_m \cdot P_m}{J \cdot s}\right\} \cdot \frac{1}{s}$$

Assuming that the phase deviation information $\Delta\theta_c$ recognized by the control device 2 coincides with the phase deviation $\Delta\theta$, the following equation (Math. 5) is obtained.

[Math. 5]

$$\Delta\theta = -\frac{\tau_m \cdot P_m}{J \cdot (s^2 + K_P \cdot s + K_I)}$$

In a case where the motor outputs the torque $\tau_m$ to perform an acceleration and deceleration operation, the phase deviation $\Delta\theta$ is steadily as follows (Math. 6).

[Math. 6]

$$\lim_{s \to 0}(\Delta\theta) = -\frac{\tau_m \cdot P_m}{J \cdot K_I}$$

That is, in a case where the phase synchronization control unit 14 is constructed by the general PI control, as described by using (Math. 1) to (Math. 6), the estimation phase deviation $\Delta\theta$ (= $-(\tau_m \cdot P_m)/(J \cdot K_I)$) illustrated in FIG. 6 steadily remains during the acceleration and deceleration operation depending on the torque $\tau_m$, the inertia moment J, and the integral gain $K_I$.

As is clear from (Math. 6), in a case where the integral gain $K_I$ is sufficiently large and the acceleration and deceleration is gentle, the phase deviation $\Delta\theta$ is also small. However, under conditions such as slip/slide, the equivalent inertia moment J becomes small, and unless the torque is reduced to be small, a large phase deviation $\Delta\theta$ occurs.

FIG. 7 is a diagram illustrating a current vector in a case where the phase deviation $\Delta\theta$ occurs between the rotor phase ($\theta_d$) and the control phase estimation value ($\theta_{dc}$).

In a case where a reference phase of a rotor of the synchronous machine 4 is set as a d-axis, a reference phase of the rotor estimated by the control device 2 is set as a dc-axis, and the phase deviation $\Delta\theta$ occurs, current control is performed to obtain the current command values $i_d^*$ and $i_q^*$, but actually flowing currents are $i_d$ and $i_q$, and the torque $\tau_m$ actually output by the motor has a large error with respect to the torque command

value $\tau_m{}^*$.

As described above, not only control becomes unstable but also torque accuracy decreases. Thus, it is desirable not to generate the phase deviation $\Delta\theta$ corresponding to the acceleration not only in a state where a speed changes at a high acceleration such as during the slip/slide but also during normal acceleration and deceleration in an adhesion state.

Hereinafter, a description will be given regarding a configuration in which a term for compensating a deviation amount due to an acceleration component is provided in sensorless control for the purpose of speeding up slip/slide detection while a control system is stabilized even at the time of the rapid change in the speed due to slip occurrence which is a main point of the present invention and the slip/slide is detected without using differentiation processing by using an output value of the term for compensating the acceleration component.

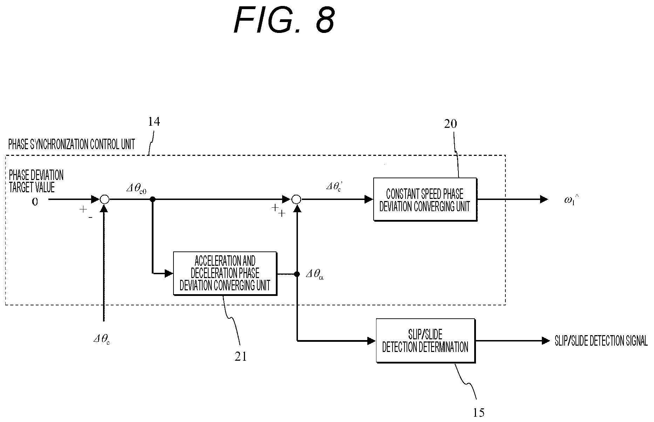

FIG. 8 is a diagram illustrating an example of functional blocks of the phase synchronization control unit 14 according to the first embodiment.

The phase synchronization control unit 14 includes a constant speed phase deviation converging unit 20 that can converge the phase deviation to zero at a constant speed and an acceleration and deceleration phase deviation converging unit 21 that can converge the phase deviation at the time of the acceleration and deceleration.

The acceleration and deceleration phase deviation converging unit 21 receives, as an input, a phase deviation amount (before compensation) $\Delta\theta_{c0}$ which is a difference between the phase deviation information $\Delta\theta_c$ and a phase deviation target value, and outputs the acceleration and deceleration phase deviation compensation amount $\Delta\theta_\alpha$.

The constant speed phase deviation converging unit 20 receives, as an input, a phase deviation amount (after compensation) $\Delta\theta_c$' that is an addition value of the phase deviation amount (before compensation) $\Delta\theta_{c0}$ and the acceleration and deceleration phase deviation compensation amount $\Delta\theta_\alpha$, and outputs the angular velocity estimation value $\omega_1{}^\wedge$.

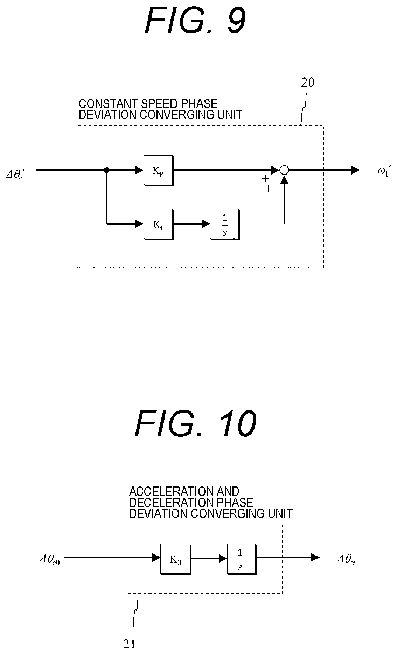

FIG. 9 is a diagram illustrating an example of functional blocks of the constant speed phase deviation converging unit 20. The PI control using the proportional gain $K_P$ and the integral gain $K_I$ is performed.

FIG. 10 is a diagram illustrating an example of functional blocks of the acceleration and deceleration phase deviation converging unit 21. The integration is performed by an integral gain $K_{II}$.

In order not to generate a steady-state deviation of the phase during the acceleration and deceleration illustrated in (Math. 6), as in the first embodiment, an order of a transfer function for calculating the angular velocity estimation value $\omega_1{}^\wedge$ from the phase deviation $\Delta\theta_c$ in the phase synchronization control unit 14 may be constructed to be second or higher as illustrated in the following equation (Math. 7).

[Math. 7]

$$\omega_1' = \left(K_P + \frac{K_I}{s}\right)\left(1 + \frac{K_{II}}{s}\right)(-\Delta\theta_c)$$

Similarly to (Math. 5), the following equation (Math. 8) is obtained by organizing the equation for the phase deviation $\Delta\theta$' in the first embodiment.

[Math. 8]

$$\Delta\theta' = -\frac{\tau_m \cdot P_m}{J \cdot \left\{s^2 + K_P \cdot s + K_I + \frac{K_{II}}{s}(K_P \cdot s + K_I)\right\}}$$

In a case where the vehicle is in the acceleration and deceleration operation, the steadily generated phase deviation $\Delta\theta$' can converge to zero as in the following equation (Math. 9).

[Math. 9]

$$\lim_{s\to 0}(\Delta\theta') = 0$$

At this time, since the acceleration and deceleration phase deviation converging unit 21 operates to output a compensation amount such that the steady-state deviation of the phase deviation $\Delta\theta$ with $K_{II}/s$ of (Math. 6) becomes zero, the output (acceleration and deceleration phase deviation compensation amount) $\Delta\theta_\alpha$ has a relationship of the following equation (Math. 10).

[Math. 10]

$$\Delta\theta_\alpha = \frac{K_{II}}{s} = \frac{\tau_m \cdot P_m}{J \cdot K_I}$$

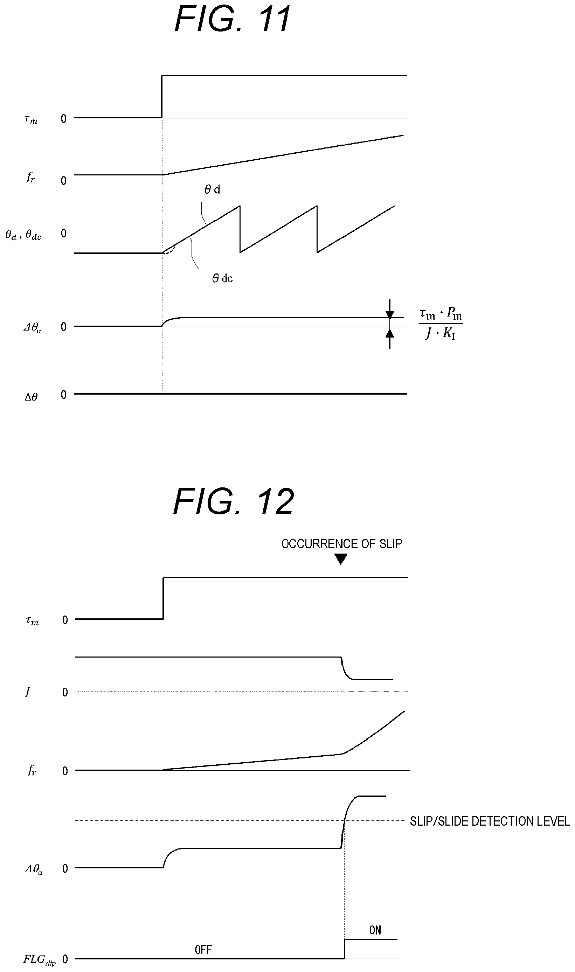

FIG. 11 is a diagram illustrating an example of an effect obtained by adding compensation by the acceleration and deceleration phase deviation converging unit 21.

As illustrated in FIG. 11, the steady-state deviation of the phase at the time of the acceleration and deceleration can be converged to zero by the acceleration and deceleration phase deviation compensation amount $\Delta\theta_\alpha$ which is the output of the acceleration and deceleration phase deviation converging unit 21. Even in a case where the slip/slide occurs and the acceleration and deceleration increase, it is possible to prevent an increase in the phase deviation and to prevent control instability and a decrease in torque accuracy.

The acceleration and deceleration phase deviation compensation amount $\Delta\theta_\alpha$ which is the output of the acceleration and deceleration phase deviation converging unit 21 changes depending on the equivalent inertia moment J including the vehicle mass and the tangential force coefficient $\mu$ as viewed from the motor axis in a case

where the torque $\tau_m$ and the integral gain $K_I$ are known.

The inventors have found that information corresponding to acceleration can be obtained from phase deviation information without using differential processing by focusing on the acceleration and deceleration phase deviation compensation amount $\Delta\theta_\alpha$ which is the output of the acceleration and deceleration phase deviation converging unit 21, and have devised a method for detecting the slip/slide based on this information.

FIG. 12 is a diagram illustrating a method for detecting the slip by the output of the acceleration and deceleration phase deviation converging unit when the slip occurs.

Since the inertia moment J appears to be rapidly decreased at the time of the slip with respect to the phase deviation $\Delta\theta$ in the normal adhesion state, $\Delta\theta_\alpha$ of the output value of the acceleration and deceleration phase deviation converging unit 21 expressed by (Math. 10) also increases.

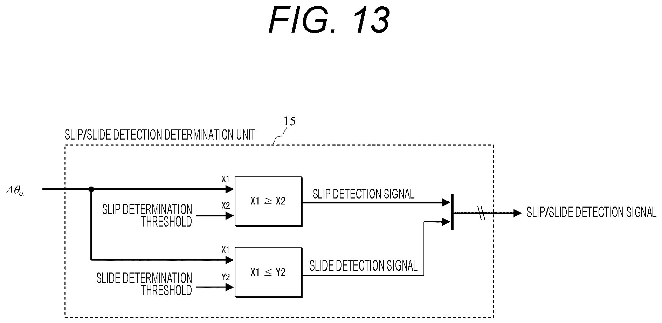

FIG. 13 is a diagram illustrating an example of functional blocks of the slip/slide detection determination unit 15.

In a case where the acceleration and deceleration phase deviation compensation amount $\Delta\theta_\alpha$ output from the phase synchronization control unit 14 exceeds a determination value (slip determination threshold or slide determination threshold) of an acceleration component of a phase deviation assumed in the normal adhesion state, the slip/slide is regarded as occurring, and the slip/slide detection signal is output to the torque command calculation unit 11.

Here, the slip determination threshold or the slide determination threshold is set to a level that is larger than the compensation amount at the time of the acceleration and deceleration in the adhesion state and does not cause erroneous detection depending on a vibration component included in the phase deviation information.

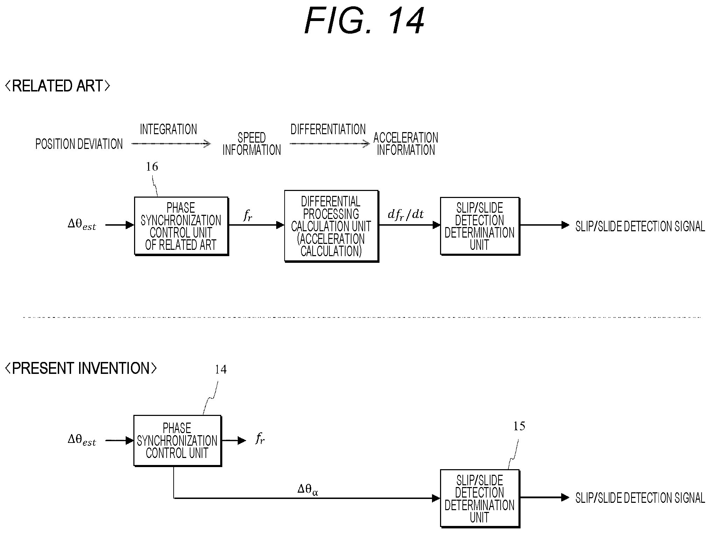

FIG. 14 is a diagram illustrating a comparison between a configuration of the related art for detecting the slip/slide and a configuration of the present invention.

Hereinafter, a difference in configuration and effect between the related art and the present invention will be described with reference to FIG. 14.

<Configuration of related art>

In the method of the related art described in PTL 1, a configuration in which a frequency estimation value is calculated by performing integration processing by PI control or the like of a phase synchronization control unit 16 of the related art and then an acceleration estimation value (dfr/dt) is calculated by differentiating the frequency estimation value by differential processing is generally often used.

In such a system, since differential processing (s) is performed after integration processing (1/s) is performed by PI control, it is clear that there is room for improvement even though calculation processing itself is considered, and it is understood that an acceleration component can be extracted without using the differential processing.

In addition, since the phase synchronization control unit 16 of the related art has a cutoff frequency, a problem that the detection of the slip/slide is delayed cannot be avoided. Furthermore, in a case where differential processing is used to calculate an acceleration, it is necessary to provide low-pass filter processing as described in PTL 1 and PTL 2 as a countermeasure against noise, and it is obvious that the detection of the slip/slide is delayed.

<Configuration and effect of present invention>

On the other hand, in the present invention, the acceleration component of the phase deviation estimation value $\Delta\theta_{est}$ before the frequency estimation value is calculated is extracted to detect the slip/slide. Thus, the slip/slide can be detected earlier than in the configuration of the related art.

Even in a case where the slip/slide occurs and the speed changes at a high acceleration, since the phase deviation $\Delta\theta$ due to the acceleration is compensated by the output $\Delta\theta_\alpha$ of the acceleration and deceleration phase deviation converging unit 21, an effect of stabilizing the sensorless control at the time of the occurrence of the slip/slide can also be obtained in addition to speeding up the detection of the slip/slide.

In addition, since the phase deviation $\Delta\theta$ represented in (Math. 6) is suppressed even in the adhesion state in which the slip/slide does not occur, the effect of stabilizing the sensorless control and improving torque accuracy can also be obtained without causing a torque error due to the phase deviation described with reference to FIG. 7.

On the other hand, when a sensorless control gain is increased as in PTL 3, as can be seen from (Math. 6), the phase deviation $\Delta\theta$ can be reduced. However, there is a limit to increasing the gain due to a calculation cycle of the control device, a delay of a voltage output, and a delay of current detection, and the control may be destabilized by simply increasing the gain.

Furthermore, the configuration of the related art illustrated in FIG. 14 and the differentiation processing (acceleration calculation) used only for the slip/slide detection described in PTL 1 and PTL 2 can be unnecessary, and an effect of reducing a calculation load of a microcomputer mounted on the control device 2 can also be obtained.

The above description is differences in configuration and effect between the related art and the present invention.

Next, a modification of the first embodiment will be described.

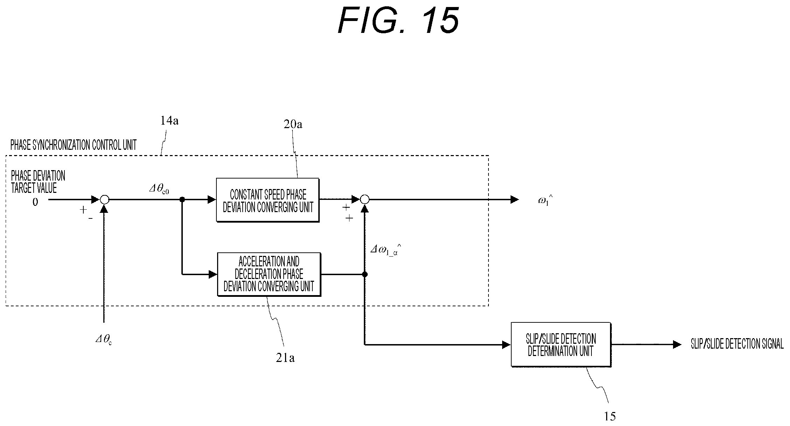

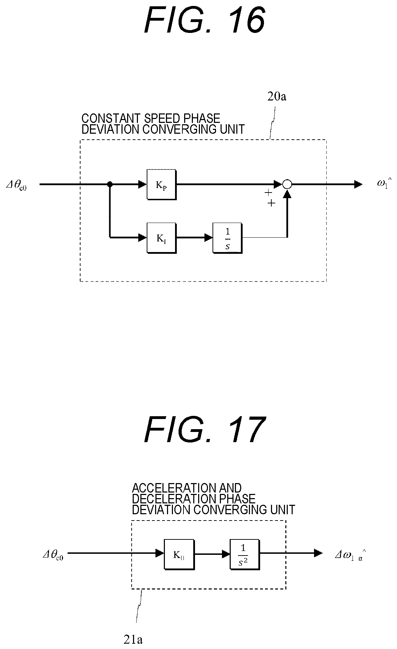

FIG. 15 is a diagram illustrating an example of functional blocks of a phase synchronization control unit 14a according to a modification of the first embodiment, FIG. 16 is a diagram illustrating an example of functional blocks of a constant speed phase deviation converging unit 20a in the phase synchronization control unit 14a, and FIG. 17 is a diagram illustrating an example of functional blocks of an acceleration and deceleration phase deviation converging unit 21a in the phase synchronization control unit 14a.

The phase synchronization control unit 14a is different from the phase synchronization control unit 14 illustrated in FIG. 8 in that a phase deviation amount (before compensation) $\Delta\theta_{c0}$ is input in parallel to the constant speed phase deviation converging unit 20a and the acceleration and deceleration phase deviation converging unit 21a. At this time, unlike FIG. 10, the acceleration and deceleration phase deviation converging unit 21a sets an order of a denominator of a transfer function for calculating the angular velocity estimation value $\omega_1{}^{\wedge}$ from the phase deviation $\Delta\theta_c$ by providing a square term of 1/s as illustrated in FIG. 17. As a result, an effect of suppressing the phase deviation $\Delta\theta$ at the time of the acceleration and deceleration can be obtained.

Since a similar effect can be obtained by setting the order of the denominator of the transfer function to a second or higher order, the order may be any order as long as a term of the second or higher order is included, and the phase synchronization control unit 14 is not necessarily limited to the configuration illustrated in FIGS. 8 to 10 or FIGS. 15 to 17.

In addition, even in a case where the phase synchronization control unit 14 is constructed by calculating the difference from the phase estimation value $\theta_{dc}$ by using the information on the phase detection value $\theta_r$ by the resolver or the like and using the difference as the phase deviation information $\Delta\theta_c$, since the steady-state deviation similarly remains while the vehicle is being accelerated and decelerated, the present invention can also be applied to a configuration of control with a resolver or control with a speed sensor.

In the first embodiment described above, the synchronous machine 4 has been described as an example of the rotary electric machine, but the rotary electric machine is not limited to the synchronous machine, and can be applied to other rotary electric machines such as an induction machine.

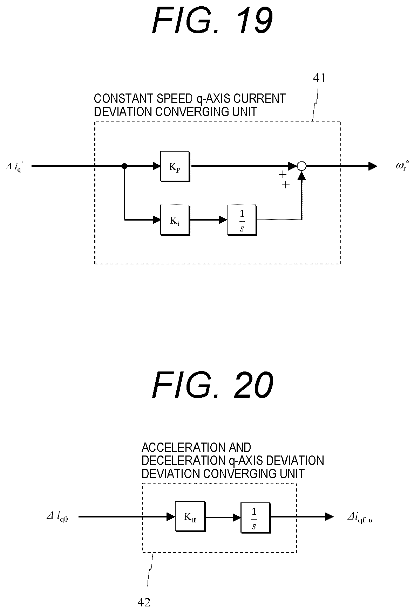

FIG. 18 is a diagram illustrating an example of functional blocks of a frequency estimation control unit 40 in a case where the first embodiment is applied to the drive device of the induction machine, FIG. 19 is a diagram illustrating an example of functional blocks of a constant speed q-axis current deviation converging unit 41 in a frequency estimation control unit 40, and FIG. 20 is a diagram illustrating an example of functional blocks of an acceleration and deceleration q-axis current deviation converging unit 42 in the frequency estimation control unit 40.

For example, even in a case where an angular velocity of the rotor is estimated from a deviation amount between a q-axis current command value and a q-axis current detection value, the acceleration and deceleration q-axis current deviation converging unit 42 compensates for a q-axis current deviation amount due to the acceleration. That is, when the slip/slide is detected based on an acceleration and deceleration q-axis current deviation compensation amount $\Delta i_{q\_\alpha}$ which is an output of the acceleration and deceleration q-axis current deviation converging unit 42, it is possible to obtain an effect of detecting the slip/slide in an early stage while speed estimation control is stabilized.

In the configurations illustrated in FIGS. 18 to 20, similarly to (Math. 6), a deviation amount of the following equation (Math. 11) remains in a case where the compensation corresponding to the acceleration is not added, and the compensation amount is the following equation (Math. 12) similarly to (Math. 10).

[Math. 11]

$$\lim_{s\to 0}(i_q^* - i_{qf}) = -\frac{\tau_{\mathrm{m}} \cdot P_{\mathrm{m}}}{J \cdot K_{\mathrm{I}}}$$

[Math. 12]

$$\Delta i_{q\_\alpha} = \frac{K_{II}}{s} = \frac{\tau_m \cdot P_{\mathrm{m}}}{J \cdot K_{I}}$$

That is, regardless of a type of the rotary electric machine, the effect of the present invention can be obtained by a configuration in which a compensation value for correcting a quantity of a state (an estimation phase of the rotor in the case of the synchronous machine or a current flowing through the induction machine in the case of the induction machine) to be used as an input of the calculation of the angular velocity estimation value is output in order to suppress a deviation amount generated in the quantity of the state while the rotary electric machine is being accelerated and decelerated to be substantially zero and the slip/slide is detected in a case where the compensation value exceeds a predetermined value.

As described above, the drive device for the rotary electric machine according to the first embodiment includes the voltage output device 3 that outputs the voltage to the synchronous machine 4 and the control device 2 that controls the output voltage of the voltage output device 3 based on the torque command value $\tau_{\mathrm{m}}$, and the control device 2 includes the phase synchronization control unit 14 that outputs the angular velocity estimation value $\omega_1{}^{\wedge}$ from the phase deviation information of the rotor. The phase synchronization control unit 14 includes the acceleration and deceleration phase deviation converging unit 21 that suppresses the steady-state deviation of the estimation phase at the time of the acceleration and deceleration, and includes the slip/-slide detection determination unit 15 that detects a slip/-slide state of the wheel driven by the synchronous machine 4 based on the output of the acceleration and deceleration phase deviation converging unit 21. As a result, it is possible to speed up the slip/slide detection while the control system is stabilized even at the time of the slip/slide. In addition, in the case of the induction machine, a similar effect is obtained by replacing the phase deviation with the q-axis current deviation.

[Second embodiment]

A second embodiment according to the present invention is different from the first embodiment in that a determination threshold for detecting the slip/slide by the slip/slide detection determination unit 15 is set to be variable depending on an operating state of the vehicle and a surrounding environment.

As a result, even in a case where an operation of the rotary electric machine or the surrounding environment (torque, occupancy rate, weather, composition state, or traveling resistance) changes, it is possible to set an appropriate slip/slide determination threshold, and it is possible to further speed up the slip/slide detection while erroneous detection of slip/slide is prevented as compared with the first embodiment.

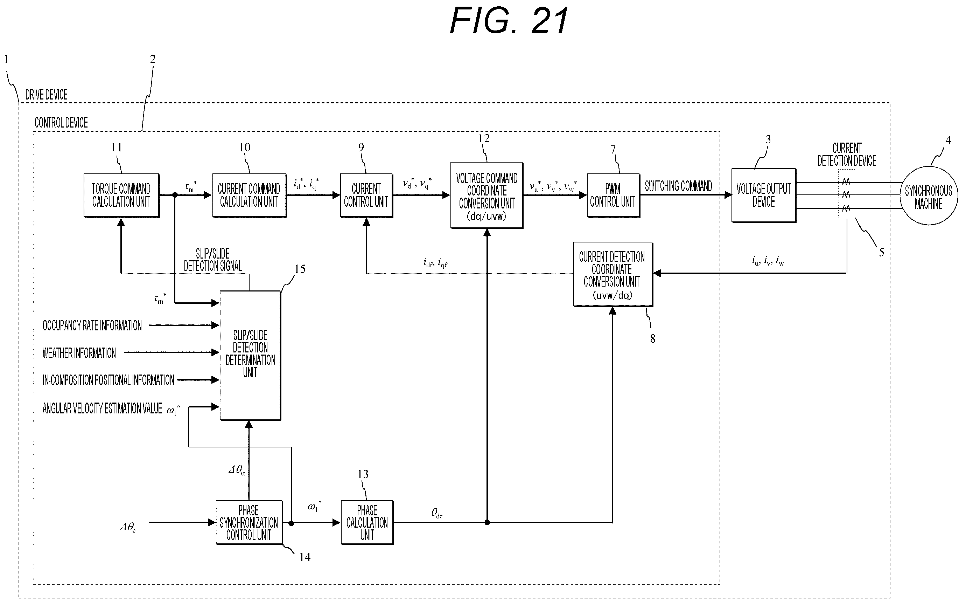

FIG. 21 is a diagram illustrating an example of functional blocks of a drive device for a rotary electric machine according to a second embodiment.

In the second embodiment, the torque command value $\tau_m^*$, occupancy rate information, weather information, in-composition positional information, and the angular velocity estimation value $\omega_1{}^\wedge$ are input to the slip/slide detection determination unit 15, and the slip/-slide determination threshold is set to be variable.

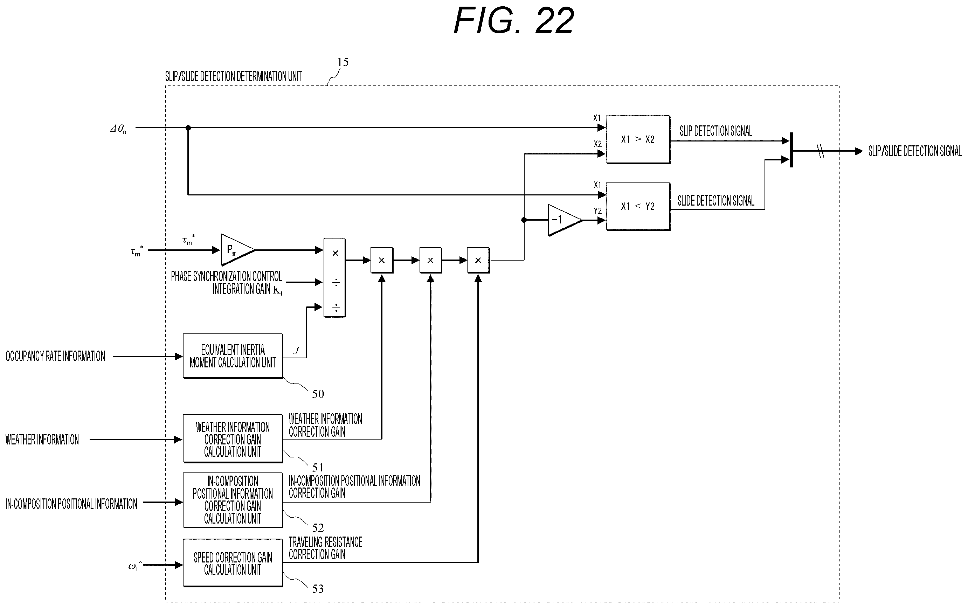

FIG. 22 is a diagram illustrating an example of functional blocks of the slip/slide detection determination unit 15 according to the second embodiment.

(1) Regarding torque (torque command value $\tau_m^*$)

As can be seen from (Math. 10), for example, as the torque $\tau_m$ decreases, the acceleration and deceleration also decrease, and the compensation amount $\Delta\theta_\alpha$ in the normal adhesion state also decreases. That is, the determination threshold is adjusted to be high in a case where the torque command value $\tau_m^*$ becomes large and the determination threshold is adjusted to be low in a case where the torque command value $\tau_m^*$ becomes small. Thus, it is also possible to set an appropriate determination threshold for the state of the torque, and it is possible to realize higher speed detection while the erroneous detection of the slip/slide is prevented.

(2) Regarding occupancy rate information

As can be seen from FIG. 3, the tangential force

($= \mu \cdot W \cdot g$) is proportional to a weight W applied per axis. Since the weight W changes depending on an occupancy rate of passengers, for example, in a case where the occupancy rate becomes low, the slip/slide becomes easy, and thus, the determination threshold is lowered. In a case where the occupancy rate becomes high, the slip/slide becomes difficult, and thus, the determination threshold is increased. By doing this, it is possible to set an appropriate determination threshold corresponding to the occupancy rate, and it is possible to realize further high-speed detection while the erroneous detection of the slip/slide is prevented.

In FIG. 22, a value obtained by dividing the torque command value $\tau_m^*$ by the integral gain $K_I$ and the inertia moment J is set as the slip/slide determination threshold according to a calculation expression of (Math. 10). Here, the occupancy rate information is calculated as the equivalent inertia moment J by the equivalent inertia moment calculation unit 50.

(3) Regarding weather information

As can be seen from FIG. 4, the tangential force coefficient $\mu$ in rainy weather, is smaller than the tangential force coefficient in fine weather, and the tangential force ($= \mu \cdot W \cdot g$) is smaller. Thus, for example, in a case where information on rain or snowfall is detected from an external device by a wiper operation, weather information, or the like, since the slip/slide is likely to occur, the determination threshold is lowered. By doing this, even in a case where a situation of a road surface (rail surface) becomes slippery due to a change in weather such as rain or snowfall, it is possible to realize further high-speed detection.

In FIG. 22, a weather information correction gain calculation unit 51 having weather information as an input calculates a weather information correction gain and outputs the calculated gain as one of correction gains of the slip/slide determination threshold.

(4) Regarding in-composition positional information

In FIG. 4, similarly to the principle in which the tangential force coefficient $\mu$ changes depending on weather, that is, a state of the road surface (rail surface), in a case where the axle 35 to which the rotary electric machine is connected is positioned on a head side with respect to a traveling direction, raindrops, dust, and the like on the rail surface are not separated, and the slip/-slide tends to easily occur. On the other hand, in a case where the axle 35 to which the rotary electric machine is connected is positioned on a rear side with respect to the traveling direction, the slip/slide tends to be relatively less likely to occur even in rain weather or the like.

Therefore, when a traveling direction of the composition itself and a car on which the axle 35 to which the rotary electric machine is connected is mounted can be discriminated, it is possible to perform adjustment to an appropriate slip/slide determination threshold. For example, in a case where the vehicle is positioned on a first car side with respect to the traveling direction, since the slip/slide becomes easy, the determination threshold is lowered. In a case where the vehicle is positioned on a rear car side with respect to the traveling direction, since the slip/slide becomes difficult, the determination threshold is increased. By doing this, it is possible to set an appropriate determination threshold corresponding to a position of a vehicle having the axle in the composition, and it is possible to realize further high-speed detection while the erroneous detection of the slip/slide is prevented.

In FIG. 22, an in-composition positional information correction gain calculation unit 52 having the in-composition positional information as an input calculates an in-composition positional information correction gain and outputs the calculated gain as one of the correction gains of the slip/slide determination threshold.

(5) Regarding angular velocity estimation value $\omega_1{}^\wedge$

The tangential force coefficient $\mu$ has dependency on the vehicle speed (see tangential force coefficient table illustrated in FIG. 3), and the tangential force coefficient $\mu$ decreases as the vehicle speed increases. In addition, the traveling resistance also increases as the speed increases, and the slip/slide of the wheel easily occurs. Thus, for example, in a case where the angular velocity estimation value $\omega_1{}^\wedge$ becomes high, since the slip/slide becomes easy, the determination threshold is lowered. In a case where the angular velocity estimation value $\omega_1{}^\wedge$ becomes low, since the slip/slide becomes difficult, the determination threshold is increased. In addition, instead of the angular velocity estimation value $\omega_1{}^\wedge$, a frequency of the rotary electric machine or the vehicle speed may be directly used. By doing this, it is possible to set an appropriate determination threshold corresponding to the vehicle speed, and it is possible to realize further high-speed detection while the erroneous detection of the slip/slide is prevented.

In FIG. 22, a speed correction gain calculation unit 53 having the angular velocity estimation value $\omega_1{}^\wedge$ as an input calculates a traveling resistance correction gain and outputs the calculated gain as one of the correction gains of the slip/slide determination threshold.

In addition, adjustment means of the determination thresholds may be any method as long as the slip/slide determination threshold is changed depending on each parameter such as a calculation expression or a table for each parameter.

Further, in FIG. 22, in the slip and the slide, a value obtained by inverting a sign is used as the determination threshold, but the correction gain calculation may be separately provided in the slip and the slide.

As described above, in the second embodiment, the torque command value $\tau_m{}^*$, the occupancy rate information, the weather information, the in-composition positional information, and the angular velocity estimation value $\omega_1{}^\wedge$ are taken into the slip/slide detection determination unit 15, and the determination threshold for detecting the slip/slide is set to be variable depending on these pieces of information. As a result, it is possible to realize further high-speed slip/slide detection while the erroneous detection of the slip/slide is prevented.

[Third embodiment]

A third embodiment according to the present invention is different from the second embodiment in that an upper and lower limiter is provided for the output of the acceleration and deceleration phase deviation converging unit 21.

As a result, even in a case where the slip/slide detection is delayed or in a case where the rotor acceleration greatly fluctuates in positive and negative directions, the phase deviation information $\Delta\theta_c$ rapidly vibrates, and the output $\Delta\theta_\alpha$ of the acceleration and deceleration phase deviation converging unit 21 becomes excessive, an effect of stabilizing the control system can be obtained without deteriorating followability of the phase synchronization control unit 14.

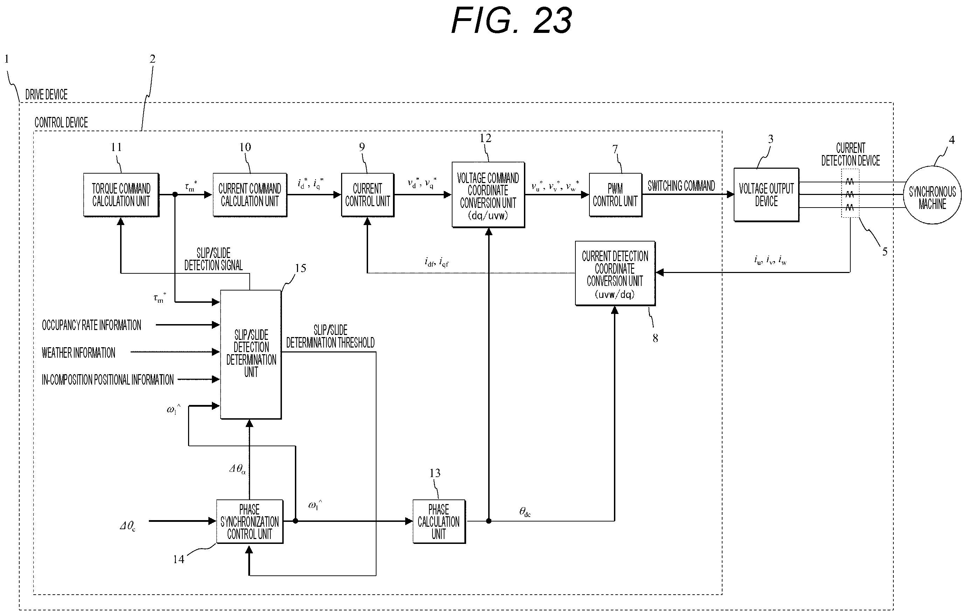

FIG. 23 is a diagram illustrating an example of functional blocks of a drive device for a rotary electric machine according to the third embodiment.

In the third embodiment, the slip/slide determination threshold is output from the slip/slide detection determination unit 15, is input to the phase synchronization control 14, and is used for calculating upper and lower limit values for the output of the acceleration and deceleration phase deviation converging unit 21.

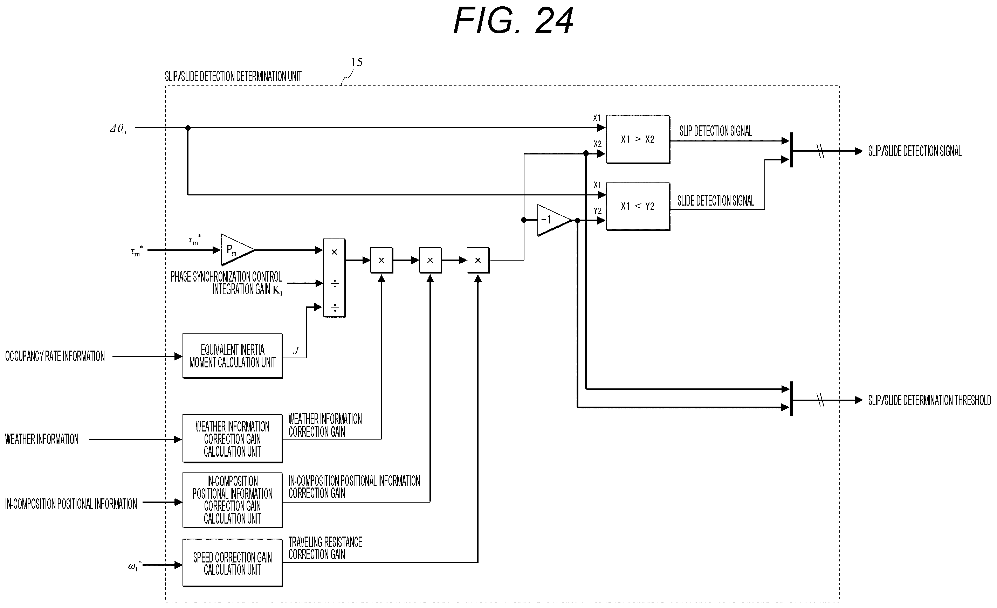

FIG. 24 is a diagram illustrating an example of functional blocks of the slip/slide detection determination unit 15 according to the third embodiment.

A function of outputting the determination threshold for detecting the slip/slide is added to the slip/slide detection determination unit 15 according to the second embodiment illustrated in FIG. 22.

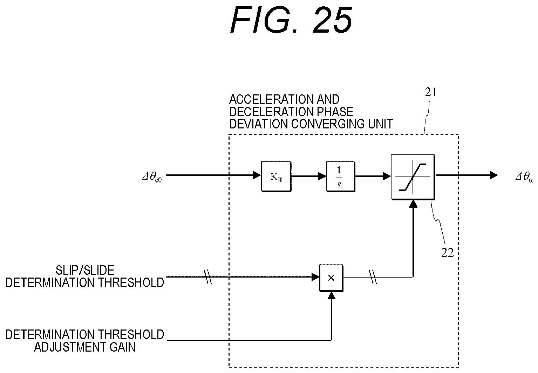

FIG. 25 is a diagram illustrating an example of functional blocks of the acceleration and deceleration phase deviation converging unit 21 according to the third embodiment.

In the third embodiment, an upper and lower limiter 22 is provided at the output of the acceleration and deceleration phase deviation compensation amount $\Delta\theta_\alpha$. A set value of the upper and lower limiter 22 is set to a value slightly larger than a level determined as the slip detection by multiplying the slip/slide determination threshold by a determination threshold adjustment gain.

In addition, an upper limit value of the upper and lower limiter 22 is set based on the determination threshold at the time of the slip, and a lower limit value of the upper and lower limiter 22 is set based on the determination threshold at the time of the slide.

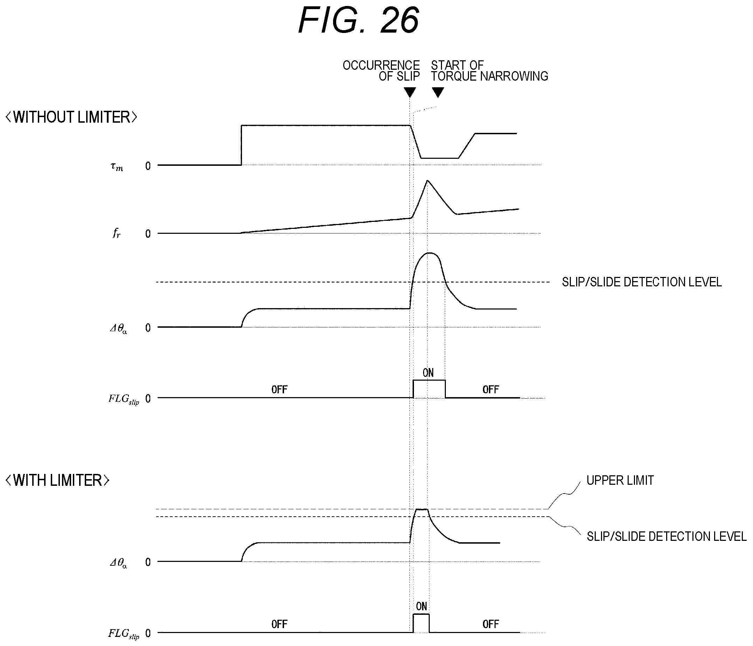

FIG. 26 is a diagram illustrating a comparison of effects depending on the presence or absence of the upper and lower limiter 22 provided in the acceleration and deceleration phase deviation converging unit 21.

Without the limiter, the acceleration and deceleration phase deviation compensation amount $\Delta\theta_\alpha$ continues to accumulate until the slip converges after the slip is detected and the reducing of the torque is started. Thus, it takes time for the acceleration and deceleration phase deviation compensation amount $\Delta\theta_\alpha$ to return to a steady-state value even after re-adhesion.

On the other hand, in the configuration with the limiter according to the third embodiment, in a case where the limiter is limited to a value slightly larger than a slip/slide detection level, it is possible to prevent the acceleration and deceleration phase deviation compensation amount $\Delta\theta_\alpha$ from being excessively exceeded and to obtain an effect of accelerating the convergence of the acceleration and deceleration phase deviation compensation amount $\Delta\theta_\alpha$ after re-adhesion to the steady-state value.

In addition, the excessive amount is prevented, and thus, an ON time of a detection timing of the slip/slide becomes close to an actual slip time, and there is also an effect of being optimized, and a risk of the erroneous detection of the slip/slide after re-adhesion can also be reduced.

As described above, in the third embodiment, the upper and lower limiter 22 is provided in the output of the acceleration and deceleration phase deviation converging unit 21, and thus, the convergence of the acceleration and deceleration phase deviation compensation amount $\Delta\theta_\alpha$ to the steady-state value is accelerated after the re-adhesion control by a torque operation. As a result, it is possible to prevent the erroneous detection of the slip/slide after the re-adhesion.

Although the embodiments according to the present invention have been specifically described, the present invention is not limited to the above-described embodiments, and various modifications can be made without departing from the scope of the present invention.

Reference Signs List

1 drive device
2 control device
3 voltage output device
4 synchronous machine
5 current detector
7 PWM control unit
8 current detection coordinate conversion unit
9 current control unit
10 current command calculation unit
11 torque command calculation unit
12 voltage command coordinate conversion unit
13 phase calculation unit
14, 14a phase synchronization control unit
15 slip/slide detection determination unit
16 phase synchronization control unit of related art
20, 20a constant speed phase deviation converging unit
21, 21a acceleration and deceleration phase deviation converging unit
22 upper and lower limiter
27 wheel
30 rotor shaft
31 carriage
32 small gear
33 large gear
34 joint
35 axle
36 rail
40 frequency estimation control unit
41 constant speed q-axis current deviation converging unit
42 acceleration and deceleration q-axis current deviation converging unit
50 equivalent inertia moment calculation unit
51 weather information correction gain calculation unit
52 in-composition positional information correction gain calculation unit
53 speed correction gain calculation unit

## Claims

1. A drive device (1) comprising:

   a voltage output device (3) that outputs a drive voltage to a rotary electric machine of a vehicle, said vehicle comprising a drive wheel driven by the rotary electric machine;
   a current detector (5) that detects a current flowing through the rotary electric machine; and
   a control device (2) that estimates and calculates an angular velocity of a rotor of the rotary electric machine,
   wherein the control device
   calculates a compensation value for compensating a quantity of a state to be used as an input for estimating and calculating the angular velocity to suppress a steady-state deviation generated in the quantity of the state while the rotary electric machine is being accelerated and decelerated to be substantially zero, and
   detects slip or slide of the drive wheel driven by the rotary electric machine in a case where the compensation value exceeds a predetermined value,
   **characterized in that**:

   the rotary electric machine is a synchronous electric motor (4),
   the quantity of the state is a phase deviation estimation value indicating a difference between a phase of the rotor and a phase estimation value of the rotor estimated by the control device, and
the control device (2)
adds, to the phase deviation estimation value, a phase deviation compensation value calculated as the compensation value for suppressing the steady-state deviation of the phase deviation estimation value steadily generated while the synchronous electric motor is being accelerated and decelerated to be substantially zero, and calculates an angular velocity estimation value based on the phase deviation estimation value obtained by the addition of the phase deviation compensation value, and
detects the slip or the slide of the drive wheel driven by the synchronous electric motor based on the phase deviation compensation value.

2. A drive device (1) comprising:

a voltage output device (3) that outputs a drive voltage to a rotary electric machine of a vehicle, said vehicle comprising a drive wheel driven by the rotary electric machine;
a current detector (5) that detects a current flowing through the rotary electric machine; and
a control device (2) that estimates and calculates an angular velocity of a rotor of the rotary electric machine,
wherein the control device
calculates a compensation value for compensating a quantity of a state to be used as an input for estimating and calculating the angular velocity to suppress a steady-state deviation generated in the quantity of the state while the rotary electric machine is being accelerated and decelerated to be substantially zero, and
detects slip or slide of the drive wheel driven by the rotary electric machine in a case where the compensation value exceeds a predetermined value,
**characterized in that**:

the rotary electric machine is an induction electric motor,
the quantity of the state is a current detection value of a current flowing through the induction electric motor, and
the control device (2)
adds, to a current deviation between the current detection value and a current command value, a current deviation compensation value calculated as the compensation value for suppressing the steady-state deviation of the current deviation steadily generated while the induction electric motor is being accelerated and decelerated to be substantially zero, and calculates an angular velocity estimation value based on the current deviation obtained by the addition of the current deviation compensation value, and
detects the slip or the slide of the drive wheel driven by the induction electric motor based on the current deviation compensation value.

3. The drive device (1) for a rotary electric machine according to claim 1 or claim 2, wherein
the control device (2) reduces a torque command value for the rotary electric machine when the slip or the slide is detected.

4. The drive device (1) for a rotary electric machine according to any one of claims 1 to 3, wherein

the control device (2)
sets a determination threshold for detecting the slip or the slide to be variable depending on either a rotational frequency of the rotary electric machine or a vehicle speed of a railway vehicle on which the rotary electric machine is mounted, sets the determination threshold to be lower with an increase in any one of the frequency and the vehicle speed, and sets the determination threshold to be higher with a decrease in any one of the frequency and the vehicle speed.

5. The drive device (1) for a rotary electric machine according to any one of claims 1 to 4, wherein

the control device (2)
sets a determination threshold for detecting the slip or the slide to be variable depending on a torque command value for the rotary electric machine, sets the determination threshold to be higher with an increase in the torque command value, and sets the determination threshold to be lower with a decrease in the torque command value.

6. The drive device (1) for a rotary electric machine according to any one of claims 1 to 3, wherein

the control device (2)
sets a determination threshold for detecting the slip or the slide to be variable depending on any one of the angular velocity estimation value, a rotational frequency of the rotary electric machine, or a vehicle speed of a railway vehicle on which the rotary electric machine is mounted, sets the determination threshold to be lower with an increase in any one of the angular velocity estimation value, the frequency, or the vehicle speed, and sets the determination threshold to be higher with a decrease in any one of the angular velocity estimation value, the frequency, or the vehicle speed.

7. The drive device (1) for a rotary electric machine according to any one of claims 1 to 6, wherein

the control device (2)
sets a determination threshold for detecting the slip or the slide to be variable depending on an occupancy rate of passengers of a railway vehicle on which the rotary electric machine is mounted, sets the determination threshold to be higher with an increase in the occupancy rate, and sets the determination threshold to be lower with a decrease in the occupancy rate.

8. The drive device (1) for a rotary electric machine according to any one of claims 1 to 7, wherein

the control device (2)
sets a determination threshold for detecting the slip or the slide to be variable depending on weather information, sets the determination threshold to be higher in fine weather, and sets the determination threshold to be lower in rainy or snowfall weather.

9. The drive device (1) for a rotary electric machine according to any one of claims 1 to 8, wherein

the control device (2)
sets a determination threshold for detecting the slip or the slide to be variable depending on in-composition positional information indicating a car and a traveling direction of a railway vehicle on which the rotary electric machine is mounted in a train composition, sets the determination threshold to be lower in a case where the in-composition positional information is positioned on a head side with respect to a traveling direction of a train, and sets the determination threshold to be higher in a case where the in-composition positional information is positioned on a rear side with respect to the traveling direction of the train.

10. The drive device (1) for a rotary electric machine according to any one of claims 1 to 9, wherein

the control device (2) comprises an upper and lower limiter (22); and
the control device (2) is configured to output the compensation value through the upper and lower limiter (22).

11. The drive device (1) for a rotary electric machine according to claim 10, wherein

the control device (2)
sets upper and lower limit values of the upper and lower limiter (22) based on the determination threshold according to any one of claims 5 to 10.

12. A railway vehicle on which the drive device (1) for a rotary electric machine according to any one of claims 1 to 11 is mounted.

13. A drive method of a rotary electric machine of a vehicle, said vehicle comprising a drive wheel driven by the rotary electric machine that controls a voltage output device (3) that outputs a drive voltage to a rotary electric machine, the drive method being performed by a control device of a drive device of said rotary electric machine and comprising:

a step of detecting a current flowing through the rotary electric machine;
a step of estimating and calculating an angular velocity of a rotor of the rotary electric machine when an output voltage of the voltage output device is controlled,
wherein the step includes
a first step of calculating a compensation value for compensating a quantity of a state to be used as an input for estimating and calculating the angular velocity to suppress a steady-state deviation generated in the quantity of the state while the rotary electric machine is being accelerated and decelerated to be substantially zero, and
a second step of detecting slip or slide of the drive wheel driven by the rotary electric machine in a case where the compensation value exceeds a predetermined value,
**characterized in that**:

in a case where the rotary electric machine is a synchronous electric motor (4),
the quantity of the state is a phase deviation estimation value indicating a difference between a phase of the rotor and a phase estimation value of the rotor, and
the first step includes
a step of calculating a phase deviation compensation value as the compensation value to suppress the steady-state deviation of the phase deviation estimation value steadily generated while the synchronous electric motor is being accelerated and decelerated to be substantially zero,
a step of adding the phase deviation compensation value to the phase deviation estimation value, and

a step of calculating an angular velocity estimation value based on the phase deviation estimation value obtained by the addition of the phase deviation compensation value.

14. A drive method of a rotary electric machine of a vehicle, said vehicle comprising a drive wheel driven by the rotary electric machine that controls a voltage output device (3) that outputs a drive voltage to a rotary electric machine, the drive method being performed by a control device of a drive device of said rotary electric machine and comprising:

a step of detecting a current flowing through the rotary electric machine;
a step of estimating and calculating an angular velocity of a rotor of the rotary electric machine when an output voltage of the voltage output device is controlled,
wherein the step includes
a first step of calculating a compensation value for compensating a quantity of a state to be used as an input for estimating and calculating the angular velocity to suppress a steady-state deviation generated in the quantity of the state while the rotary electric machine is being accelerated and decelerated to be substantially zero, and
a second step of detecting slip or slide of the drive wheel driven by the rotary electric machine in a case where the compensation value exceeds a predetermined value,
**characterized in that**:

in a case where the rotary electric machine is an induction electric motor,
the quantity of the state is a current detection value of a current flowing through the induction electric motor, and
the first step includes
a step of calculating a phase deviation compensation value as the compensation value to suppress the steady-state deviation of a current deviation between the current detection value and a current command value steadily generated while the induction electric motor is being accelerated and decelerated to be substantially zero,
a step of adding the phase deviation compensation value to the phase deviation, and
a step of calculating an angular velocity estimation value based on the phase deviation obtained by the addition of the phase deviation compensation value.

15. The drive method for a rotary electric machine according to claim 13 or claim 14, further comprising:
a step of reducing a torque command value of the rotary electric machine when the slip or the slide is detected.

16. The drive method for a rotary electric machine according to any one of claims 13 to 15, wherein
in the second step, a determination threshold for detecting the slip or the slide is provided, and the determination threshold is set to be variable depending on at least one of:

(1) a torque command value of the rotary electric machine,
(2) either a rotational frequency of the rotary electric machine or a vehicle speed of a railway vehicle on which the rotary electric machine is mounted,
(3) an occupancy rate of passengers of the railway vehicle on which the rotary electric machine is mounted,
(4) weather information, and
(5) in-composition positional information indicating a car and a traveling direction of the railway vehicle on which the rotary electric machine is mounted in a train composition.

17. The drive method for a rotary electric machine according to any one of claims 13 to 15, wherein
in the second step, a determination threshold for detecting the slip or the slide is provided, and the determination threshold is set to be variable depending on at least one of:

(1) a torque command value of the rotary electric machine,
(2) an occupancy rate of passengers of the railway vehicle on which the rotary electric machine is mounted,
(3) weather information,
(4) in-composition positional information indicating a car and a traveling direction of the railway vehicle on which the rotary electric machine is mounted in a train composition, and
(5) any one of the angular velocity estimation value, a rotational frequency of the rotary electric machine, and a vehicle speed of a railway vehicle on which the rotary electric machine is mounted.

18. The drive method for a rotary electric machine according to claim 16 or 17, wherein

the first step includes
a step of outputting the compensation value through a limiter having upper and lower values set based on the determination threshold subsequently to the calculation of the compensation value.

**Patentansprüche**

1.  Antriebsvorrichtung (1), die Folgendes umfasst:

    eine Spannungsausgabevorrichtung (3), die eine Antriebsspannung an eine elektrische Rotationsmaschine eines Fahrzeugs ausgibt, wobei das Fahrzeug ein Antriebsrad umfasst, das von der elektrischen Rotationsmaschine angetrieben wird;
    einen Stromdetektor (5), der einen Strom detektiert, der durch die elektrische Rotationsmaschine fließt; und
    eine Steuervorrichtung (2), welche die Winkelgeschwindigkeit eines Rotors der elektrischen Rotationsmaschine schätzt und berechnet, wobei die Steuervorrichtung einen Kompensationswert zum Kompensieren einer Zustandsgröße berechnet, der als eine Eingabe zum Schätzen und Berechnen der Winkelgeschwindigkeit dient, um eine stationäre Abweichung zu unterdrücken, die in der Zustandsgröße erzeugt wird, während die elektrische Rotationsmaschine beschleunigt und auf im Wesentlichen null verlangsamt wird, und Schlupf oder Gleiten des von der elektrischen Rotationsmaschine angetriebenen Antriebsrads detektiert, wenn der Kompensationswert einen vorbestimmten Wert überschreitet, **dadurch gekennzeichnet, dass**:

    die elektrische Rotationsmaschine ein Synchronelektromotor (4) ist,
    die Zustandsgröße ein Phasenabweichungsschätzwert ist, der die Differenz zwischen einer Phase des Rotors und einem Phasenschätzwert des Rotors angibt, der von der Steuervorrichtung geschätzt wird, und
    die Steuervorrichtung (2)
    zum Phasenabweichungsschätzwert einen Phasenabweichungskompensationswert addiert, der als der Kompensationswert zum Unterdrücken der stationären Abweichung des Phasenabweichungsschätzwerts berechnet wird, die stetig erzeugt wird, während der Synchronelektromotor beschleunigt und auf im Wesentlichen null verlangsamt wird, und einen Winkelgeschwindigkeitsschätzwert basierend auf dem Phasenabweichungsschätzwert berechnet, der durch die Addition des Phasenabweichungskompensationswert erhalten wird, und
    den Schlupf oder das Gleiten des vom Synchronelektromotor angetriebenen Antriebsrads basierend auf dem Phasenabweichungskompensationswert detektiert.

2.  Antriebsvorrichtung (1), die Folgendes umfasst:

    eine Spannungsausgabevorrichtung (3), die eine Antriebsspannung an eine elektrische Rotationsmaschine eines Fahrzeugs ausgibt, wobei das Fahrzeug ein Antriebsrad umfasst, das von der elektrischen Rotationsmaschine angetrieben wird;
    einen Stromdetektor (5), der einen Strom detektiert, der durch die elektrische Rotationsmaschine fließt; und
    eine Steuervorrichtung (2), welche die Winkelgeschwindigkeit eines Rotors der elektrischen Rotationsmaschine schätzt und berechnet, wobei die Steuervorrichtung einen Kompensationswert zum Kompensieren einer Zustandsgröße berechnet, der als Eingabe zum Schätzen und Berechnen der Winkelgeschwindigkeit dient, um eine stationäre Abweichung zu unterdrücken, die in der Zustandsgröße erzeugt wird, während die elektrische Rotationsmaschine beschleunigt und auf im Wesentlichen null verlangsamt wird, und Schlupf oder Gleiten des von der elektrischen Rotationsmaschine angetriebenen Antriebsrads detektiert, wenn der Kompensationswert einen vorbestimmten Wert überschreitet, **dadurch gekennzeichnet, dass**:

    die elektrische Rotationsmaschine ein Induktionselektromotor ist,
    die Zustandsgröße ein Stromdetektionswert eines Stroms ist, der durch den Induktionselektromotor fließt, und
    die Steuervorrichtung (2)
    zu einer Stromabweichung zwischen dem Stromdetektionswert und einem Stromsollwert einen Stromabweichungskompensationswert addiert, der als der Kompensationswert zum Unterdrücken der stationären Abweichung des Stromabweichungsschätzwerts berechnet wird, die stetig erzeugt wird, während der Induktionselektromotor beschleunigt und auf im Wesentlichen null verlangsamt wird, und einen Winkelgeschwindigkeitsschätzwert basierend auf dem Stromabweichungsschätzwert berechnet, der durch die Addition des Stromabweichungskompensationswert erhalten wird, und
    den Schlupf oder das Gleiten des vom Induktionselektromotor angetriebenen Antriebsrads basierend auf dem Stromabweichungskompensationswert detektiert.

3.  Antriebsvorrichtung (1) für eine elektrische Rotationsmaschine nach Anspruch 1 oder Anspruch 2, wobei
    die Steuervorrichtung (2) einen Drehmomentsollwert für die elektrische Rotationsmaschine verringert, wenn der Schlupf oder das Gleiten detektiert wird.

4.  Antriebsvorrichtung (1) für eine elektrische Rotationsmaschine nach einem der Ansprüche 1 bis 3, wobei

    die Steuervorrichtung (2)
    einen Bestimmungsschwellwert für das Detektieren des Schlupfes oder des Gleitens abhängig von entweder einer Drehfrequenz der elektrischen Rotationsmaschine oder einer Fahrzeuggeschwindigkeit eines Schienenfahrzeugs, auf dem die elektrische Rotationsmaschine montiert ist, als variabel festlegt, den Bestimmungsschwellwert bei einer Zunahme in einer aus der Frequenz und der Fahrzeuggeschwindigkeit niedriger festlegt und den Bestimmungsschwellwert bei einer Abnahme in einer aus der Frequenz und der Fahrzeuggeschwindigkeit höher festlegt.

5.  Antriebsvorrichtung (1) für eine elektrische Rotationsmaschine nach einem der Ansprüche 1 bis 4, wobei

    die Steuervorrichtung (2)
    einen Bestimmungsschwellwert für das Detektieren des Schlupfes oder des Gleitens abhängig von einem Drehmomentsollwert für die elektrische Rotationsmaschine als variabel festlegt, den Bestimmungsschwellwert bei einer Zunahme des Drehmomentsollwerts höher festlegt und den Bestimmungsschwellwert bei einer Abnahme des Drehmomentsollwerts niedriger festlegt.

6.  Antriebsvorrichtung (1) für eine elektrische Rotationsmaschine nach einem der Ansprüche 1 bis 3, wobei

    die Steuervorrichtung (2)
    einen Bestimmungsschwellwert für das Detektieren des Schlupfes oder des Gleitens abhängig von einem aus dem Winkelgeschwindigkeitsschätzwert, einer Drehfrequenz der elektrischen Rotationsmaschine oder einer Fahrzeuggeschwindigkeit eines Schienenfahrzeugs, auf dem die elektrische Rotationsmaschine montiert ist, den Bestimmungsschwellwert bei einer Zunahme von einem aus dem Winkelgeschwindigkeitsschätzwert, der Frequenz oder der Fahrzeuggeschwindigkeit niedriger festlegt und den Bestimmungsschwellwert bei einer Abnahme von einem aus dem Winkelgeschwindigkeitsschätzwert, der Frequenz oder der Fahrzeuggeschwindigkeit höher festlegt.

7.  Antriebsvorrichtung (1) für eine elektrische Rotationsmaschine nach einem der Ansprüche 1 bis 6, wobei

    die Steuervorrichtung (2)
    einen Bestimmungsschwellwert für das Detektieren des Schlupfes oder des Gleitens abhängig von einem Besetzungsgrad mit Fahrgästen eines Schienenfahrzeugs, auf dem die elektrische Rotationsmaschine montiert ist, den Bestimmungsschwellwert bei einer Zunahme des Besetzungsgrads höher festlegt und den Bestimmungsschwellwert mit einer Abnahme des Besetzungsgrads niedriger einstellt.

8.  Antriebsvorrichtung (1) für eine elektrische Rotationsmaschine nach einem der Ansprüche 1 bis 7, wobei

    die Steuervorrichtung (2)
    einen Bestimmungsschwellwert für das Detektieren des Schlupfes oder des Gleitens abhängig von Wetterinformationen als variabel festlegt, den Bestimmungsschwellwert bei gutem Wetter höher einstellt und den Bestimmungsschwellwert bei regnerischem Wetter oder Schneefall niedriger einstellt.

9.  Antriebsvorrichtung (1) für eine elektrische Rotationsmaschine nach einem der Ansprüche 1 bis 8, wobei

    die Steuervorrichtung (2)
    einen Bestimmungsschwellwert für das Detektieren des Schlupfes oder des Gleitens abhängig von Verband-Positionsinformationen, die einen Waggon und eine Fahrtrichtung des Schienenfahrzeugs innerhalb des Verbands angeben, auf dem die elektrische Rotationsmaschine montiert ist, als variabel festlegt, den Bestimmungsschwellwert in einem Fall, in dem die Verband-Positionsinformationen eine Position an einer Kopfseite in Bezug auf die Fahrtrichtung eines Zugs angibt, niedriger festlegt, und den Bestimmungsschwellwert in einem Fall, in dem die Verband-Positionsinformationen eine Position einer der Rückseite in Bezug auf die Fahrtrichtung eines Zugs angibt, höher festlegt.

10. Antriebsvorrichtung (1) für eine elektrische Rotationsmaschine nach einem der Ansprüche 1 bis 9, wobei

die Steuervorrichtung (2)

einen oberen und einen unteren Begrenzer (22) umfasst; und

die Steuervorrichtung (2) ausgelegt ist, den Kompensationswert durch den oberen und unteren Begrenzer (22) auszugeben.

11. Antriebsvorrichtung (1) für eine elektrische Rotationsmaschine nach Anspruch 10, wobei

die Steuervorrichtung (2)

einen oberen und einen unteren Grenzwert für den oberen und unteren Begrenzer (22) basierend auf dem Bestimmungsschwellwert nach einem der Ansprüche 5 bis 10 festlegt.

12. Schienenfahrzeug, auf dem eine Antriebsvorrichtung (1) für eine elektrische Rotationsmaschine nach einem der Ansprüche 1 bis 11 montiert ist.

13. Antriebsverfahren für eine elektrische Rotationsmaschine eines Fahrzeugs, wobei das Fahrzeug ein Antriebsrad umfasst, das von der elektrischen Rotationsmaschine angetrieben wird, die eine Spannungsausgabevorrichtung (3) steuert, die eine Antriebsspannung an eine elektrische Rotationsmaschine ausgibt, wobei das Antriebsverfahren von einer Steuervorrichtung einer Antriebsvorrichtung der elektrischen Rotationsmaschine ausgeführt wird und Folgendes umfasst:

einen Schritt des Detektierens eines Stroms, der durch die elektrische Rotationsmaschine fließt; einen Schritt des Schätzens und Berechnens einer Winkelgeschwindigkeit eines Rotors der elektrischen Rotationsmaschine, wenn die Ausgangsspannung der Spannungsausgabevorrichtung gesteuert wird, wobei der Schritt Folgendes umfasst:

einen ersten Schritt des Berechnens eines Kompensationswerts zum Kompensieren einer Zustandsgröße, der als eine Eingabe zum Schätzen und Berechnen der Winkelgeschwindigkeit dient, um eine stationäre Abweichung zu unterdrücken, die in der Zustandsgröße erzeugt wird, während die elektrische Rotationsmaschine beschleunigt und auf im Wesentlichen null verlangsamt wird, und

einen zweiten Schritt des Detektierens von Schlupf oder Gleiten des von der elektrischen Rotationsmaschine angetriebenen Antriebsrads, wenn der Kompensationswert einen vorbestimmten Wert überschreitet,

**dadurch gekennzeichnet, dass**:

wenn die elektrische Rotationsmaschine ein Synchronelektromotor (4) ist, die Zustandsgröße ein Phasenabweichungsschätzwert ist, der die Differenz zwischen der Phase des Rotors und einem Phasenschätzwert des Rotors angibt, und

der erste Schritt Folgendes umfasst:

einen Schritt des Berechnens eines Phasenabweichungskompensationswerts als den Kompensationswert, um die stationäre Abweichung des Phasenabweichungsschätzwerts zu unterdrücken, die stetig erzeugt wird, während der Synchronelektromotor beschleunigt und auf im Wesentlichen null verlangsamt wird,

einen Schritt des Addierens des Phasenabweichungskompensationswerts zum Phasenabweichungsschätzwert, und

einen Schritt des Berechnens eines Winkelgeschwindigkeitsschätzwerts basierend auf dem Phasenabweichungsschätzwert berechnet, der durch die Addition des Phasenabweichungskompensationswert erhalten wird.

14. Antriebsverfahren für eine elektrische Rotationsmaschine eines Fahrzeugs, wobei das Fahrzeug ein Antriebsrad umfasst, das von der elektrischen Rotationsmaschine angetrieben wird, die eine Spannungsausgabevorrichtung (3) steuert, die eine Antriebsspannung an eine elektrische Rotationsmaschine ausgibt, wobei das Antriebsverfahren von einer Steuervorrichtung einer Antriebsvorrichtung der elektrischen Rotationsmaschine ausgeführt wird und Folgendes umfasst:

einen Schritt des Detektierens eines Stroms, der durch die elektrische Rotationsmaschine fließt; einen Schritt des Schätzens und Berechnens einer Winkelgeschwindigkeit eines Rotors der elektrischen Rotationsmaschine, wenn die Ausgangsspannung der Spannungsausgabevorrichtung gesteuert wird, wobei der Schritt Folgendes umfasst:

einen ersten Schritt des Berechnens eines Kompensationswerts zum Kompensieren einer Zustandsgröße, der als Eingabe zum Schätzen und Berechnen der Winkelgeschwindigkeit dient, um eine stationäre Abweichung zu unterdrücken, die in der Zustandsgröße erzeugt wird, während die elektrische Rotationsmaschine beschleunigt und auf im Wesentlichen null verlangsamt wird, und

einen zweiten Schritt des Detektierens von Schlupf oder Gleiten des von der elektrischen Rotationsmaschine angetriebenen Antriebsrads, wenn der Kompensationswert einen vorbestimmten Wert überschreitet,

**dadurch gekennzeichnet, dass**:

wenn die elektrische Rotationsmaschine ein Induktionselektromotor ist, die Zustandsgröße ein Stromdetektionswert eines Stroms ist, der durch den Induktionselektromotor fließt, und der erste Schritt Folgendes umfasst:

einen Schritt des Berechnens eines Phasenabweichungskompensationswerts als der Kompensationswert, um die stationäre Abweichung einer Stromabweichung zwischen dem Stromdetektionswert und einem Stromsollwert zu unterdrücken, die stetig erzeugt wird, während der Synchronelektromotor beschleunigt und auf im Wesentlichen null verlangsamt wird,

einen Schritt des Addierens des Phasenabweichungskompensationswerts zur Phasenabweichung, und

einen Schritt des Berechnens eines Winkelgeschwindigkeitsschätzwerts basierend auf der Phasenabweichung berechnet, der durch die Addition des Phasenabweichungskompensationswert erhalten wird.

15. Antriebsverfahren für eine elektrische Rotationsmaschine nach Anspruch 13 oder Anspruch 14, das weiters Folgendes umfasst:
einen Schritt des Verringerns eines Drehmomentsollwerts der elektrischen Rotationsmaschine, wenn der Schlupf oder das Gleiten detektiert wird.

16. Antriebsverfahren für eine elektrische Rotationsmaschine nach einem der Ansprüche 13 bis 15, wobei im zweiten Schritt einen Bestimmungsschwellwert für das Detektieren des Schlupfes oder des Gleitens bereitgestellt wird und der Bestimmungsschwellwert abhängig von zumindest einem der Folgenden als variabel festgelegt wird:

(1) einem Drehmomentsollwert der elektrischen Rotationsmaschine,

(2) entweder einer Drehfrequenz der elektrischen Rotationsmaschine oder einer Fahrzeuggeschwindigkeit eines Schienenfahrzeugs, auf dem die elektrische Rotationsmaschine montiert ist,

(3) einem Besetzungsgrad mit Fahrgästen des Schienenfahrzeugs, auf dem die elektrische Rotationsmaschine montiert ist,

(4) Wetterinformationen und

(5) Verband-Positionsinformationen, die einen Waggon und die Fahrtrichtung des Schienenfahrzeugs, auf dem die elektrische Rotationsmaschine montiert ist, in einem Zugverband angeben.

17. Antriebsverfahren für eine elektrische Rotationsmaschine nach einem der Ansprüche 13 bis 15, wobei im zweiten Schritt ein Bestimmungsschwellwert für das Detektieren des Schlupfes oder des Gleitens bereitgestellt wird und der Bestimmungsschwellwert abhängig von zumindest einem der Folgenden als variabel festgelegt wird:

(1) einem Drehmomentsollwert der elektrischen Rotationsmaschine,

(2) dem Besetzungsgrad mit Fahrgästen des Schienenfahrzeugs, auf dem die elektrische Rotationsmaschine montiert ist,

(3) Wetterinformationen,

(4) Verband-Positionsinformationen, die einen Waggon und die Fahrtrichtung des Schienenfahrzeugs, auf dem die elektrische Rotationsmaschine montiert ist, in einem Zugverband angeben, und

(5) einem aus dem Winkelgeschwindigkeitsschätzwert, einer Drehfrequenz der elektrischen Rotationsmaschine und einer Fahrzeuggeschwindigkeit eines Schienenfahrzeugs, auf dem die elektrische Rotationsmaschine montiert ist.

18. Antriebsverfahren für eine elektrische Rotationsmaschine nach Anspruch 16 oder 17, wobei der erste Schritt Folgendes umfasst:
einen Schritt des Ausgebens des Kompensationswerts durch einen Begrenzer mit einem Set aus einem oberen und unteren Grenzwert basierend auf dem Bestimmungsschwellwert nach der Berechnung des Kompensationswerts.

**Revendications**

1. Dispositif d'entraînement (1) comprenant :

un dispositif de sortie de tension (3) qui fournit en sortie une tension d'entraînement à une machine électrique rotative d'un véhicule, ledit véhicule comprenant une roue motrice entraînée par la machine électrique rotative;

un détecteur de courant (5) qui détecte un courant circulant à travers la machine électrique rotative; et

un dispositif de commande (2) qui estime et calcule une vitesse angulaire d'un rotor de la machine électrique rotative,

dans lequel le dispositif de commande

calcule une valeur de compensation, pour compenser une quantité d'un état à utiliser en tant qu'entrée pour estimer et calculer la vitesse angulaire afin de supprimer un écart à l'état stable généré dans la quantité de l'état pendant que la machine électrique rotative est accélérée et décélérée, comme étant sensiblement nulle, et

détecte un patinage ou un glissement de la roue motrice entraînée par la machine électrique rotative dans le cas où la valeur de compensation dépasse une valeur prédéterminée,

**caractérisé en ce que** :

la machine électrique rotative est un moteur électrique synchrone (4),

la quantité de l'état est une valeur d'estimation d'écart de phase indiquant une différence entre une phase du rotor et une valeur d'estimation de phase du rotor estimée par le dispositif de commande, et

le dispositif de commande (2)

ajoute, à la valeur d'estimation d'écart de phase, une valeur de compensation d'écart de phase calculée en tant que la valeur de compensation pour supprimer l'écart à l'état stable de la valeur d'estimation d'écart de phase générée de manière stable pendant que le moteur électrique synchrone est accéléré et décéléré, comme étant sensiblement nulle, et calcule une valeur d'estimation de vitesse angulaire sur la base de la valeur d'estimation d'écart de phase obtenue par l'ajout de la valeur de compensation d'écart de phase, et

détecte le patinage ou le glissement de la roue motrice entraînée par le moteur électrique synchrone sur la base de la valeur de compensation d'écart de phase.

2. Dispositif d'entraînement (1), comprenant :

un dispositif de sortie de tension (3) qui fournit en sortie une tension d'entraînement à une machine électrique rotative d'un véhicule, ledit véhicule comprenant une roue motrice entraînée par la machine électrique rotative;

un détecteur de courant (5) qui détecte un courant circulant à travers la machine électrique rotative; et

un dispositif de commande (2) qui estime et calcule une vitesse angulaire d'un rotor de la machine électrique rotative,

dans lequel le dispositif de commande

calcule une valeur de compensation, pour compenser une quantité d'un état à utiliser en tant qu'entrée pour estimer et calculer la vitesse angulaire afin de supprimer un écart à l'état stable généré dans la quantité de l'état pendant que la machine électrique rotative est accélérée et décélérée, comme étant sensiblement nulle, et

détecte un patinage ou un glissement de la roue motrice entraînée par la machine électrique rotative dans le cas où la valeur de compensation dépasse une valeur prédéterminée,

**caractérisé en ce que** :

la machine électrique rotative est un moteur électrique à induction,

la quantité de l'état est une valeur de détection de courant d'un courant circulant à travers le moteur électrique à induction, et

le dispositif de commande (2)

ajoute, à un écart de courant entre la valeur de détection de courant et une valeur de commande de courant, une valeur de compensation d'écart de courant calculée en tant que la valeur de compensation pour supprimer l'écart à l'état stable de l'écart de courant généré de manière stable pendant que le moteur électrique à induction est accéléré et décéléré, comme étant sensiblement nulle, et calcule une valeur d'estimation de vitesse angulaire sur la base de l'écart de courant obtenu par l'ajout de la valeur de compensation d'écart de courant, et

détecte le patinage ou le glissement de la roue motrice entraînée par le moteur électrique à induction sur la base de la valeur de compensation d'écart de courant.

3. Dispositif d'entraînement (1) pour une machine électrique rotative selon la revendication 1 ou 2, dans lequel

le dispositif de commande (2) réduit une valeur de commande de couple pour la machine électrique rotative lorsque le patinage ou le glissement est détecté.

4. Dispositif d'entraînement (1) pour une machine électrique rotative selon l'une quelconque des revendications 1 à 3, dans lequel

le dispositif de commande (2)

définit un seuil de détermination pour détecter le patinage ou le glissement comme étant variable en fonction soit de la fréquence de rotation de la machine électrique rotative, soit d'une vitesse de véhicule du véhicule ferroviaire sur lequel la machine électrique rotative est montée, définit le seuil de détermination comme étant plus faible lors d'une augmentation de l'une quelconque parmi la fréquence et la vitesse de véhicule, et définit le seuil de détermination comme étant plus élevé lors d'une diminution de l'une quelconque parmi la fréquence et la vitesse de véhicule.

5. Dispositif d'entraînement (1) pour une machine électrique rotative selon l'une quelconque des revendications 1 à 4, dans lequel

le dispositif de commande (2)
définit un seuil de détermination pour détecter le patinage ou le glissement comme étant variable en fonction d'une valeur de commande de couple pour la machine électrique rotative, définit le seuil de détermination comme étant plus élevé lors d'une augmentation de la valeur de commande de couple, et définit le seuil de détermination comme étant plus faible lors d'une diminution de la valeur de commande de couple.

6. Dispositif d'entraînement (1) pour une machine électrique rotative selon l'une quelconque des revendications 1 à 3, dans lequel

le dispositif de commande (2)
définit un seuil de détermination pour détecter le patinage ou le glissement comme étant variable en fonction de l'une quelconque parmi la valeur d'estimation de vitesse angulaire, une fréquence de rotation de la machine électrique rotative, ou une vitesse de véhicule d'un véhicule ferroviaire sur lequel la machine électrique rotative est montée, définit le seuil de détermination comme étant plus faible lors d'une augmentation de l'une quelconque parmi la valeur d'estimation de vitesse angulaire, la fréquence, ou la vitesse de véhicule, et définit le seuil de détermination comme étant plus élevé lors d'une diminution de l'une quelconque parmi la valeur d'estimation de vitesse angulaire, la fréquence, ou la vitesse de véhicule.

7. Dispositif d'entraînement (1) pour une machine électrique rotative selon l'une quelconque des revendications 1 à 6, dans lequel

le dispositif de commande (2)
définit un seuil de détermination pour détecter le patinage ou le glissement comme étant variable en fonction du taux d'occupation de passagers d'un véhicule ferroviaire sur lequel la machine électrique rotative est montée, définit le seuil de détermination comme étant plus élevé lors d'une augmentation du taux d'occupation, et définit le seuil de détermination comme étant plus faible lors d'une diminution du taux d'occupation.

8. Dispositif d'entraînement (1) pour une machine électrique rotative selon l'une quelconque des revendications 1 à 7, dans lequel

le dispositif de commande (2)
définit un seuil de détermination pour détecter le patinage ou le glissement comme étant variable en fonction d'informations météorologiques, définit le seuil de détermination comme étant plus élevé par beau temps, et définit le seuil de détermination comme étant plus faible par temps pluvieux ou neigeux.

9. Dispositif d'entraînement (1) pour une machine électrique rotative selon l'une quelconque des revendications 1 à 8, dans lequel

le dispositif de commande (2)
définit un seuil de détermination pour détecter le patinage ou le glissement comme étant variable en fonction d'informations de position de composition interne indiquant un wagon et une direction de déplacement d'un véhicule ferroviaire sur lequel la machine électrique rotative est montée dans une composition de train, définit le seuil de détermination comme étant plus faible dans le cas où les informations de position de composition interne sont positionnées sur un côté de tête par rapport à la direction de déplacement d'un train, et définit le seuil de détermination comme étant plus élevé dans le cas où les informations de position de composition interne sont positionnées sur un côté arrière par rapport à la direction de déplacement du train.

10. Dispositif d'entraînement (1) pour une machine électrique rotative selon l'une quelconque des revendications 1 à 9, dans lequel

le dispositif de commande (2) comprend un limiteur supérieur et inférieur (22); et
le dispositif de commande (2) est configuré pour fournir en sortie la valeur de compensation par le biais du limiteur supérieur et inférieur (22).

11. Dispositif d'entraînement (1) pour une machine électrique rotative selon la revendication 10, dans lequel

le dispositif de commande (2)

définit des valeurs limites supérieure et inférieure du limiteur supérieur et inférieur (22) sur la base du seuil de détermination selon l'une quelconque des revendications 5 à 10.

12. Véhicule ferroviaire sur lequel le dispositif d'entraînement (1) pour une machine électrique rotative selon l'une quelconque des revendications 1 à 11 est monté.

13. Procédé d'entraînement d'une machine électrique rotative d'un véhicule, ledit véhicule comprenant une roue motrice entraînée par la machine électrique rotative qui commande un dispositif de sortie de tension (3) qui fournit en sortie une tension d'entraînement à une machine électrique rotative, le procédé d'entraînement étant mis en œuvre par un dispositif de commande d'un dispositif d'entraînement de ladite machine électrique rotative et comprenant :

une étape consistant à détecter un courant circulant à travers la machine électrique rotative; une étape consistant à estimer et calculer une vitesse angulaire d'un rotor de la machine électrique rotative lorsqu'une tension de sortie du dispositif de sortie de tension est commandée, dans lequel l'étape comprend une première étape consistant à calculer une valeur de compensation pour compenser une quantité d'un état à utiliser en tant qu'entrée pour estimer et calculer la vitesse angulaire afin de supprimer un écart à l'état stable généré dans la quantité de l'état pendant que la machine électrique rotative est accélérée et décélérée, comme étant sensiblement nulle, et une deuxième étape consistant à détecter un patinage ou un glissement de la roue motrice entraînée par la machine électrique rotative dans le cas où la valeur de compensation dépasse une valeur prédéterminée, **caractérisé en ce que** :

dans le cas où la machine électrique rotative est un moteur électrique synchrone (4), la quantité de l'état est une valeur d'estimation d'écart de phase indiquant une différence entre une phase du rotor et une valeur d'estimation de phase du rotor, et la première étape comprend une étape consistant à calculer une valeur de compensation d'écart de phase en tant que la valeur de compensation pour supprimer l'écart à l'état stable de la valeur d'estimation d'écart de phase générée de manière stable pendant que le moteur électrique synchrone est accéléré et décéléré, comme étant sensiblement nulle,

une étape consistant à ajouter la valeur de compensation d'écart de phase à la valeur d'estimation d'écart de phase, et une étape consistant à calculer une valeur d'estimation de vitesse angulaire sur la base de la valeur d'estimation d'écart de phase obtenue par l'ajout de la valeur de compensation d'écart de phase.

14. Procédé d'entraînement d'une machine électrique rotative d'un véhicule, ledit véhicule comprenant une roue motrice entraînée par la machine électrique rotative qui commande un dispositif de sortie de tension (3) qui fournit en sortie une tension d'entraînement à une machine électrique rotative, le procédé d'entraînement étant mis en œuvre par un dispositif de commande d'un dispositif d'entraînement de ladite machine électrique rotative, et comprenant :

une étape consistant à détecter un courant circulant à travers la machine électrique rotative; une étape consistant à estimer et calculer une vitesse angulaire d'un rotor de la machine électrique rotative lorsqu'une tension de sortie du dispositif de sortie de tension est commandée, dans laquelle l'étape comprend une première étape consistant à calculer une valeur de compensation, pour compenser une quantité d'un état à utiliser en tant qu'entrée pour estimer et calculer la vitesse angulaire afin de supprimer un écart à l'état stable généré dans la quantité de l'état pendant que la machine électrique rotative est accélérée et décélérée, comme étant sensiblement nulle, et une deuxième étape consistant à détecter un patinage ou un glissement de la roue motrice entraînée par la machine électrique rotative dans le cas où la valeur de compensation dépasse une valeur prédéterminée, **caractérisé en ce que** :

dans le cas où la machine électrique rotative est un moteur électrique à induction, la quantité de l'état est une valeur de détection de courant d'un courant circulant à travers le moteur électrique à induction, et la première étape comprend une étape consistant à calculer une valeur de compensation d'écart de phase en tant que la valeur de compensation pour supprimer l'écart à l'état stable d'un écart de courant entre la valeur de détection de courant et une valeur de commande de courant générée de manière stable pendant que le moteur électrique à induction est accéléré et décéléré, comme étant sensiblement nulle,

une étape consistant à ajouter la valeur de compensation d'écart de phase à l'écart de phase, et

une étape consistant à calculer une valeur d'estimation de vitesse angulaire sur la base de l'écart de phase obtenu par l'ajout de la valeur de compensation d'écart de phase.

15. Procédé d'entraînement pour une machine électrique rotative selon la revendication 13 ou 14, comprenant en outre :

une étape consistant à réduire une valeur de commande de couple de la machine électrique rotative lorsque le patinage ou le glissement est détecté.

16. Procédé d'entraînement pour une machine électrique rotative selon l'une quelconque des revendications 13 à 15, dans lequel

dans la deuxième étape, un seuil de détermination pour détecter le patinage ou le glissement est prévu, et le seuil de détermination est défini comme étant variable en fonction d'au moins l'un des éléments suivants :

(1) une valeur de commande de couple de la machine électrique rotative,
(2) soit une fréquence de rotation de la machine électrique rotative, soit une vitesse de véhicule d'un véhicule ferroviaire sur lequel la machine électrique rotative est montée,
(3) un taux d'occupation de passagers du véhicule ferroviaire sur lequel la machine électrique rotative est montée,
(4) des informations météorologiques, et
(5) des informations de position de composition interne indiquant un wagon et une direction de déplacement du véhicule ferroviaire sur lequel la machine électrique rotative est montée dans une composition de train.

17. Procédé d'entraînement pour une machine électrique rotative selon l'une quelconque des revendications 13 à 15, dans lequel

dans la deuxième étape, un seuil de détermination pour détecter le patinage ou le glissement est prévu, et le seuil de détermination est défini comme étant variable en fonction d'au moins l'un des éléments suivants :

(1) une valeur de commande de couple de la machine électrique rotative,
(2) un taux d'occupation de passagers du véhicule ferroviaire sur lequel la machine électrique rotative est montée,
(3) des informations météorologiques,
(4) des informations de position de composition interne indiquant un wagon et une direction de déplacement du véhicule ferroviaire sur lequel la machine électrique rotative est montée dans une composition de train, et
(5) l'une quelconque parmi la valeur d'estimation de vitesse angulaire, une fréquence de rotation de la machine électrique rotative, et une vitesse de véhicule du véhicule ferroviaire sur lequel la machine électrique rotative est montée.

18. Procédé d'entraînement d'une machine électrique rotative selon la revendication 16 ou 17, dans lequel

la première étape comprend
une étape consistant à fournir en sortie la valeur de compensation par le biais d'un limiteur ayant des valeurs supérieure et inférieure définies sur la base du seuil de détermination subséquemment au calcul de la valeur de compensation.

FIG. 1

EP 4 258 540 B1

FIG. 2

# FIG. 3

# FIG. 4

ADHESION STATE / SLIP STATE

TANGENTIAL FORCE COEFFICIENT μ [−]

FINE WEATHER

RAINY WEATHER

0

0

SLIP SPEED $v_s$ [m/s]

# FIG. 5

POWERING / OFF / REGENERATION

WHEEL AND VEHICLE SPEED

ROTATIONAL SPEED OF WHEEL

SLIP

SLIDE

VEHICLE SPEED

0

0

TIME

## FIG. 6

## FIG. 7

# FIG. 8

PHASE SYNCHRONIZATION CONTROL UNIT  14

PHASE DEVIATION TARGET VALUE
0

$\Delta\theta_{c0}$

$+$
$-$

$\Delta\theta_c$

ACCELERATION AND DECELERATION PHASE DEVIATION CONVERGING UNIT  21

$\Delta\theta_\alpha$

$+$
$+$

$\Delta\theta_c'$

CONSTANT SPEED PHASE DEVIATION CONVERGING UNIT  20

$\hat{\omega_1}$

SLIP/SLIDE DETECTION DETERMINATION  15

SLIP/SLIDE DETECTION SIGNAL

# FIG. 9

# FIG. 10

## FIG. 11

## FIG. 12

# FIG. 13

SLIP/SLIDE DETECTION DETERMINATION UNIT 15

$\varDelta\theta_\alpha$

X1

SLIP DETERMINATION THRESHOLD

X2

$X1 \geq X2$

SLIP DETECTION SIGNAL

X1

SLIDE DETERMINATION THRESHOLD

Y2

$X1 \leq Y2$

SLIDE DETECTION SIGNAL

SLIP/SLIDE DETECTION SIGNAL

# FIG. 14

⟨RELATED ART⟩

⟨PRESENT INVENTION⟩

## FIG. 15

## FIG. 16

CONSTANT SPEED PHASE
DEVIATION CONVERGING UNIT

20a

$\Delta\theta_{c0}$ — $K_P$ — + + — $\hat{\omega_1}$

$K_I$ — $\frac{1}{s}$

## FIG. 17

ACCELERATION AND
DECELERATION PHASE
DEVIATION CONVERGING UNIT

$\Delta\theta_{c0}$ — $K_{JI}$ — $\frac{1}{s^2}$ — $\Delta\hat{\omega_{1\alpha}}$

21a

EP 4 258 540 B1

# FIG. 18

FREQUENCY ESTIMATION CONTROL UNIT

40

41

$i_q{}^*$

$\Delta i_{q0}$

$+$ $-$

ACCELERATION AND DECELERATION q-AXIS CURRENT DEVIATION CONVERGING UNIT

$\Delta i_{qf\_\alpha}$

$\Delta i_q{}^{\cdot}$

$+$ $+$

CONSTANT SPEED q-AXIS CURRENT DEVIATION CONVERGING UNIT

$\hat{\omega_r}$

$i_{qf}$

42

SLIP/SLIDE DETECTION DETERMINATION UNIT

SLIP/SLIDE DETECTION SIGNAL

15

# FIG. 19

41

CONSTANT SPEED q-AXIS CURRENT
DEVIATION CONVERGING UNIT

$\Delta i_q^{'}$

$K_P$

$K_I$   $\dfrac{1}{s}$

+
+

$\omega_r^{\triangle}$

# FIG. 20

ACCELERATION AND
DECELERATION q-AXIS DEVIATION
DEVIATION CONVERGING UNIT

$\Delta i_{q0}$

$K_{II}$   $\dfrac{1}{s}$

$\Delta i_{qf\_\alpha}$

42

# FIG. 21

EP 4 258 540 B1

# FIG. 22

FIG. 23

# FIG. 24

SLIP/SLIDE DETECTION DETERMINATION UNIT

15

$\Delta\theta_\alpha$

X1
X2
$X1 \geq X2$
SLIP DETECTION SIGNAL

SLIP/SLIDE DETECTION SIGNAL

X1
Y2
$X1 \leq Y2$
SLIDE DETECTION SIGNAL

−1

$\tau_m{}^*$
$\tau_m{}^*$
$P_m$
×
×
×
×

PHASE SYNCHRONIZATION CONTROL INTEGRATION GAIN $K_1$

÷
÷

OCCUPANCY RATE INFORMATION

EQUIVALENT INERTIA MOMENT CALCULATION UNIT
$J$

SLIP/SLIDE DETERMINATION THRESHOLD

WEATHER INFORMATION

WEATHER INFORMATION CORRECTION GAIN CALCULATION UNIT
WEATHER INFORMATION CORRECTION GAIN

IN-COMPOSITION POSITIONAL INFORMATION

IN-COMPOSITION POSITIONAL INFORMATION CORRECTION GAIN CALCULATION UNIT
IN-COMPOSITION POSITIONAL INFORMATION CORRECTION GAIN

$\hat{\omega}_1$

SPEED CORRECTION GAIN CALCULATION UNIT
TRAVELING RESISTANCE CORRECTION GAIN

EP 4 258 540 B1

42

# FIG. 25

ACCELERATION AND
DECELERATION PHASE
DEVIATION CONVERGING UNIT

21

$\Delta\theta_{c0}$ → [ $K_{II}$ ] → [ $\frac{1}{s}$ ] → [⌐_/] → $\Delta\theta_{\alpha}$

22

SLIP/SLIDE
DETERMINATION THRESHOLD → [×]

DETERMINATION THRESHOLD
ADJUSTMENT GAIN

FIG. 26

<WITHOUT LIMITER>

<WITH LIMITER>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004080936 A
- JP 5515885 B
- JP 5908205 B
- US 9463697 B1
- EP 3680123 A1
- US 20140018991 A1